(19) Europäisches Patentamt
European Patent Office
Office européen des brevets

(11) EP 4 738 511 A1

(12) EUROPEAN PATENT APPLICATION

(43) Date of publication:
**06.05.2026 Bulletin 2026/19**

(21) Application number: **25212893.9**

(22) Date of filing: **03.11.2025**

(51) International Patent Classification (IPC):
***H01M 10/0562** (2010.01)*

(52) Cooperative Patent Classification (CPC):
**H01M 10/0562**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **04.11.2024 KR 20240154225**

(71) Applicant: **SAMSUNG SDI CO., LTD.**
**Yongin-si, Gyeonggi-do 17084 (KR)**

(72) Inventor: **OH, Daeyang**
**Yongin-si, Gyeonggi-do 17084 (KR)**

(74) Representative: **Michalski Hüttermann & Partner Patentanwälte mbB**
**Kaistraße 16A**
**40221 Düsseldorf (DE)**

# (54) POSITIVE ELECTRODE SLURRY FOR ALL-SOLID-STATE BATTERY AND METHOD FOR PRODUCING SAME, ALL-SOLID-STATE BATTERY PRODUCED USING SAME

(57) A positive electrode slurry for an all-solid-state battery and a method for producing the positive electrode slurry, and an all-solid-state battery are provided. The positive electrode slurry includes a positive electrode active material, a conductive material, a binder, a sulfide-based solid electrolyte, a triphenylphosphine-based additive, and a solvent.

FIG. 1

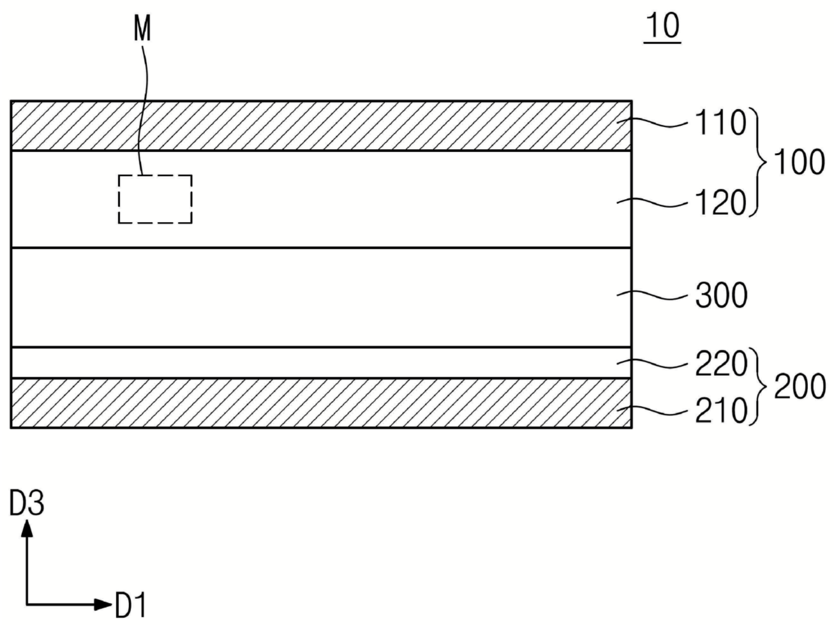


EP 4 738 511 A1

## Description

### CROSS-REFERENCE TO RELATED APPLICATIONS

The present application claims priority to and the benefit of Korean Patent Application No. 10-2024-0154225, filed on November 04, 2024, in the Korean Intellectual Property Office.

### BACKGROUND

#### 1. Field

One or more embodiments of the present disclosure relate to a positive electrode slurry for an all-solid-state battery and a method for producing the same, and an all-solid-state battery produced using the same.

#### 2. Description of the Related Art

In response to increasing industrial demand, the development of batteries with high energy density and enhanced safety has been actively pursued. For example, lithium-ion batteries have been commercialized not only in the fields of information related devices and communication devices, but also in the field of the automotive industry (e.g., automobiles). Given that user safety and/or wellbeing is a top concern in the automotive industry, battery safety is of particular importance.

Recently, all-solid-state batteries, in which the liquid electrolyte (solution) is replaced (substituted) with a solid electrolyte, have been proposed. Because these batteries do not use flammable organic solvents as dispersion media, the risk of fire or explosion is significantly reduced, even in the event of a short circuit. Accordingly, all-solid-state batteries offer substantially improved safety compared to related art lithium-ion batteries that utilize liquid electrolytes.

### SUMMARY

One or more aspects of the present disclosure are directed toward a positive electrode slurry with improved adhesion characteristics and a method for producing the same.

One or more aspects of the present disclosure are directed toward a positive electrode for an all-solid-state battery with excellent or suitable performance, and an all-solid-state battery including the same.

Additional aspects will be set forth in part in the description which follows and, in part, will be apparent from the description, or may be learned by practice of the presented embodiments of the disclosure.

According to one or more embodiments of the present disclosure, a positive electrode slurry for an all-solid-state battery includes a positive electrode active material, a conductive material, a binder, a sulfide-based solid electrolyte, a phosphine-based additive represented by Formula 1, and a solvent.

**Formula 1**

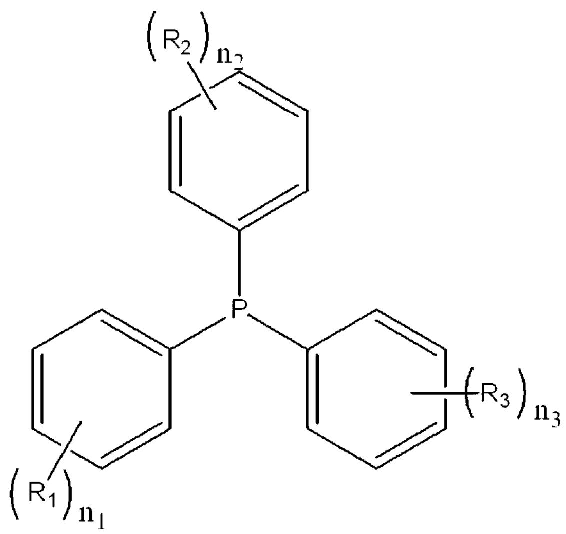

In Formula 1,

$n_1$ to $n_3$ may each independently be 0 to 5, and
$R_1$ to $R_3$ may each independently be hydrogen, a halogen, a nitrile group, a nitro group, an amine group, a substituted or unsubstituted C1 to C10 alkyl group, a substituted or unsubstituted C1 to C10 alkoxy group, a substituted or unsubstituted aryl group, or a substituted or unsubstituted C5 to C14 heteroaryl group.

According to one or more embodiments of the present disclosure, a method for producing a positive electrode slurry for an all-solid-state battery includes mixing a positive electrode active material, a conductive material, a binder, a sulfide-based solid electrolyte, a phosphine-based additive represented by Formula 1, and a solvent.

**Formula 1**

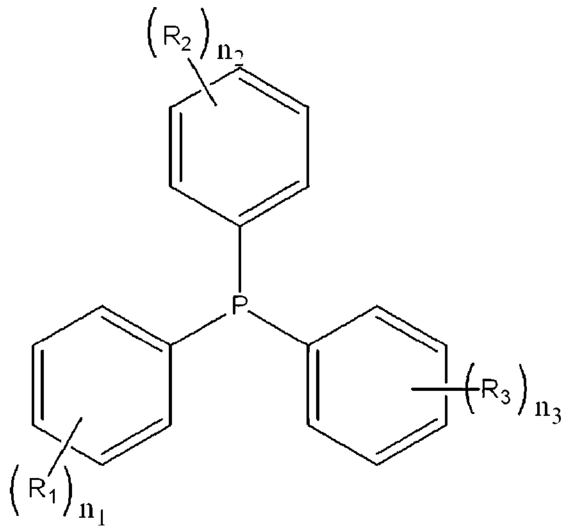

In Formula 1,

$n_1$ to $n_3$ may each independently be 0 to 5, and
$R_1$ to $R_3$ may each independently be hydrogen, a halogen, a nitrile group, a nitro group, an amine group, a substituted or unsubstituted C1 to C10 alkyl group, a substituted or unsubstituted C1 to C10 alkoxy group, a substituted or unsubstituted aryl group, or a substituted or unsubstituted C5 to C14 heteroaryl group.

According to one or more embodiments of the present disclosure, an all-solid-state battery includes a positive electrode, a negative electrode, and a solid electrolyte layer between the positive electrode and the negative electrode, and the positive electrode may include a positive electrode current collector and a positive electrode active material layer on the positive electrode current collector. The positive electrode active material layer may be formed by using the positive electrode slurry produced according to the method of the present disclosure.

**BRIEF DESCRIPTION OF THE DRAWINGS**

The accompanying drawings are included to provide a further understanding of the present disclosure, and are incorporated in and constitute a part of this disclosure. The drawings illustrate embodiments of the present disclosure and, together with the description, serve to explain principles of the present disclosure. The above and other aspects, features, and advantages of certain embodiments of the present disclosure will be more apparent from the following description taken in conjunction with the accompanying drawings. In the drawings:

FIG. 1 is a cross-sectional view of an all-solid-state battery according to one or more embodiments of the present disclosure;
FIG. 2 is a cross-sectional view of an all-solid-state battery according to one or more embodiments of the present disclosure;
FIGS. 3 and 4 are respectively a plan view and a cross-sectional view of an all-solid-state battery according to one or more embodiments of the present disclosure;
FIG. 5 is a cross-sectional view of an all-solid-state battery according to one or more embodiments of the present disclosure;
FIG. 6 is a cross-sectional view of an all-solid-state battery including a gasket structure according to one or more

embodiments of the present disclosure;
FIG. 7 is an enlarged view illustrating a positive electrode active material layer according to one or more embodiments of the present disclosure; and
FIGS. 8 and 9A to 9C are results of evaluating a bending strength of positive electrodes according to examples and comparative examples of the present disclosure.

## DETAILED DESCRIPTION

In order to fully understand the configurations and effects of the present invention, one or more embodiments of the present invention will be described in more detail with reference to the accompanying drawings. The present disclosure may, however, be embodied in one or more suitable forms and should not be construed as limited to the embodiments set forth herein, and one or more suitable changes and modifications may be made. Rather, these embodiments are provided so that this disclosure will be thorough and complete, and will fully convey the scope of the present disclosure to those skilled in the art to which the present disclosure pertains.
In this disclosure, it will be understood that, if (e.g., when) an element is referred to as being on another element, the element may be directly on the other element, or one or more intervening elements may be present therebetween. In contrast, if (e.g., when) an element is referred to as being "directly on" another element, there are no intervening elements present. In the drawings, thicknesses of components may be exaggerated for effectively explaining the technical contents. Like reference numerals or symbols refer to like elements throughout the disclosure, and duplicative descriptions thereof may not be provided for conciseness.
One or more embodiments described herein will be explained with reference to cross-sectional views and/or plan views, which are ideal or simplified illustrations of the present disclosure. In the drawings, thicknesses of films and regions may be exaggerated for effectively explaining the technical contents. Accordingly, the regions illustrated in the drawings have schematic properties, and the shapes of the regions illustrated in the drawings are intended to illustrate a specific shape of the regions of the device and are not intended to limit the scope of the disclosure. In one or more embodiments of the present disclosure, terms such as "first," "second," and "third" are used to describe one or more suitable components, but these components should not be limited by these terms. These terms are merely used to distinguish one component from another. Thus, a first element discussed herein could be termed a second element, without departing from the scope of the disclosure. Embodiments described and illustrated herein also include complementary embodiments thereof.
The terminology used herein is for describing embodiments and is not intended to limit the present disclosure. In this disclosure, the singular forms are intended to include the plural forms as well, unless the context clearly indicates otherwise. For example, the singular forms "a," "an," and "the" are intended to include the plural forms as well, unless the context clearly indicates otherwise. The terms "comprise(s)/comprising" and/or "include(s)/including" and/or "has(have)/having" used in this disclosure do not exclude the presence or addition of one or more other components. Additionally, the terms "comprise(s)/comprising," "include(s)/including," "has(have)/having", or other similar terms include or support the terms "consisting of" and "consisting essentially of," indicating the presence of stated features, numbers, steps, operations, elements, parts, and/or components, without or essentially without the presence of other features, numbers, steps, operations, elements, parts, components, and/or groups thereof. Further, the utilization of "may" when describing embodiments of the present disclosure refers to "one or more embodiments of the present disclosure".
In this disclosure, "combination thereof" may refer to a mixture, a stack, a composite, a copolymer, an alloy, a blend, and a reaction product of components.
Unless otherwise defined in this disclosure, a particle diameter/size may be an average particle diameter/size. Also, the particle diameter/size refers to an average particle diameter/size ($D_{50}$) which refers to a diameter/size of particles at a cumulative volume of about 50 vol% in a particle size distribution. In other words, D50 refers to the average diameter (or size) of particles whose cumulative volume corresponds to 50 vol% in the particle size distribution (e.g., cumulative distribution), and refers to the value of the particle size corresponding to 50% from the smallest particle when the total number of particles is 100% in the distribution curve accumulated in the order of the smallest particle size to the largest particle size. The average particle diameter/size ($D_{50}$) may be measured by a method widely suitable to those skilled in the art, for example, may be measured by a particle size analyzer, for example, HORIBA, LA-950 laser particle size analyzer, or may also be measured using a transmission electron microscope (TEM) image or a scanning electron microscope (SEM) image. In one or more embodiments, the average particle diameter/size is measured by a measuring device using dynamic light-scattering, wherein the number of particles is counted for each particle size range by performing data analysis, and an average particle diameter/size ($D_{50}$) value may then be obtained by calculation therefrom. Also, the average particle diameter/size may be measured using a laser diffraction method. When measured by the laser diffraction method, specifically, after dispersing particles to be measured in a dispersion medium, the dispersion medium is introduced into a commercial laser diffraction particle size measurement instrument (e.g., Microtrac MT 3000) and irradiated with ultrasonic waves of about 28 kHz at an output of about 60 W, and the average particle diameter/size ($D_{50}$) based on about 50% of particle size distribution in the measurement instrument may then be calculated. In the present

disclosure, when particles are spherical, "diameter/size" indicates an average particle diameter/size, and when the particles are non-spherical, the "diameter/size" indicates an average major axis length of particles.

FIG. 1 is a cross-sectional view of an all-solid-state battery 10 according to one or more embodiments of the present disclosure.

Referring to FIG. 1, the all-solid-state battery 10 according to one or more embodiments may include a positive electrode layer 100, a negative electrode layer 200 opposed to the positive electrode layer 100, and a solid electrolyte layer 300 between (e.g., arranged between) the positive electrode layer 100 and the negative electrode layer 200. However, embodiments of the present disclosure are not limited thereto, for example, in one or more embodiments, the all-solid-state battery 10 may further include an additional functional layer, for example, an adhesion improvement layer, arranged between the positive electrode layer 100 and the solid electrolyte layer 300 and/or between the negative electrode layer 200 and the solid electrolyte layer 300.

The positive electrode layer 100 according to one or more embodiments may include a positive electrode current collector 110 and a positive electrode active material layer 120 on (e.g., arranged on) the positive electrode current collector 110. The positive electrode active material layer 120 may include a positive electrode active material, a sulfide-based solid electrolyte, a conductive material, a binder, and a phosphine-based additive.

The positive electrode current collector 110 may provide a reference surface on which the positive electrode active material layer 120 is arranged. The positive electrode current collector 110 may include a plate or a foil containing indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof.

In one or more embodiments, the positive electrode current collector 110 may not be provided. In one or more embodiments, a carbon layer having a thickness of ≥ 0.1 micrometers (μm) to ≤ 4 μm may further be arranged between the positive electrode current collector 110 and the positive electrode active material layer 120 in order to improve adhesive force between the positive electrode current collector 110 and the positive electrode active material layer 120.

The positive electrode layer 100 of the all-solid-state battery 10 according to one or more embodiments may be produced using a positive electrode slurry of the present disclosure, which will be described later. The positive electrode layer 100 may be produced using a general technology for producing an electrode, and the method is not particularly limited. For example, the positive electrode slurry to be described later may be applied onto the positive electrode current collector 110 by using a doctor blade, using a spray, bar coating, slot-die coating, and/or the like, and dried and then pressed to prepare the electrode. The positive electrode active material layer 120 may be formed from the positive electrode slurry.

The positive electrode active material layer 120 will be described in more detail later with reference to FIG. 7.

Referring to FIG. 1, the negative electrode layer 200 may include a negative electrode current collector 210 and a coating layer 220 on (e.g., arranged on) the negative electrode current collector 210. The coating layer 220 may include a negative electrode active material and a binder.

The negative electrode current collector 210 may provide a reference surface on which the coating layer 220 is arranged. For example, the negative electrode current collector 210 may include a material which is not reactive to lithium, that is, a material not forming an alloy or a compound with lithium. Materials constituting the negative electrode current collector 210 may include, for example, copper (Cu), stainless steel, titanium (Ti), iron (Fe), cobalt (Co), nickel (Ni), and/or the like, but embodiments of the present disclosure are not necessarily limited thereto, and any material that is used as an electrode current collector may be used. The negative electrode current collector 210 may have a thickness of ≥ 1 μm to ≤ 20 μm, for example, ≥ 5 μm to ≤ 15 μm, and for example, ≥ 7 μm to ≤ 10 μm.

The negative electrode current collector 210 may include one of the above-described metals, or may include an alloy or a covering material (e.g., a layered material) of two or more metals thereof. The negative electrode current collector 210 may be in the form of, for example, a plate or foil. In one or more embodiments, the negative electrode current collector 210 may also not be provided.

The coating layer 220 may cause growth of lithium metal between the coating layer 220 and the negative electrode current collector 210 if (e.g., when) the all-solid-state battery 10 is charged. The coating layer 220 may serve as a protecting layer of the lithium metal, and at the same time, may suppress or reduce precipitation and growth of lithium dendrites.

The coating layer 220 may include a metal and carbon. For example, in one or more embodiments, the coating layer 220 may include at least one metal selected from the group consisting of gold (Au), platinum (Pt), palladium (Pd), silicon (Si), silver (Ag), aluminum (Al), bismuth (Bi), tin (Sn), and zinc (Zn). The coating layer 220 may include at least one carbon selected from the group consisting of carbon black, acetylene black, furnace black, Ketjen black, and graphene. In one or more embodiments, the coating layer 220 may include a mixture of carbon black and silver (Ag).

In one or more embodiments, the coating layer 220 may further include an additive other than the metal and carbon. The coating layer 220 may further include at least one additive selected from the group consisting of, for example, a binder, a filler, a coating agent, a dispersant, and an ionic conductivity auxiliary material.

The coating layer 220 may have a smaller thickness than that of the positive electrode active material layer 120.

The thickness of the coating layer 220 may be, for example, about 50% or less, about 40% or less, about 30% or less, about 20% or less, about 10% or less, or about 5% or less of the thickness of the positive electrode active material layer 120. The thickness of the coating layer 220 may be, for example, ≥1 μm to ≤ 20 μm, ≥ 2μm to ≤ 10 μm, or ≥ 3 μm to ≤ 7 μm. If (e.g., when) the thickness of the coating layer 220 is too small, lithium dendrites, formed between the coating layer 220 and the negative electrode current collector 210, may collapse the coating layer 220, and thus, cycle characteristics of the all-solid-state battery 10 may deteriorate. If (e.g., when) the thickness of the coating layer 220 is too large, the energy density of the all-solid-state battery 10 may decrease, and the internal resistance of the all-solid-state battery 10, due to the coating layer 220, may increase, thereby deteriorating the cycle characteristics of the all-solid-state battery 10.

In one or more embodiments, a carbon layer may further be included in order to improve adhesion between the coating layer 220 and the solid electrolyte layer 300.

Referring to FIG. 1, the solid electrolyte layer 300 may be arranged between the positive electrode layer 100 and the negative electrode layer 200, and may include a sulfide-based solid electrolyte excellent or suitable in lithium ionic conductivity characteristics. The solid electrolyte, included in the solid electrolyte layer 300, may be the same as or different from any one of materials that may be included in a solid electrolyte included in the positive electrode active material layer 120, which will be described in more detail later.

The solid electrolyte layer 300 according to one or more embodiments may include a solid electrolyte. The solid electrolyte may be produced by performing a treatment on a starting raw material such as $Li_2S$ and $P_2S_5$ in a melt quenching method, a mechanical milling method, and/or the like. In addition, after the treatment, heat treatment may be performed. The solid electrolyte may be amorphous, crystalline, or in a mixed state thereof. In addition, the solid electrolyte may include sulfur (S), phosphorus (P), and lithium (Li) as at least component elements of the above-described sulfide-based solid electrolyte materials. For example, in one or more embodiments, the sulfide-based solid electrolyte may be a material containing $Li_2S$-$P_2S_5$. In embodiments of using the material containing $Li_2S$-$P_2S_5$ as the sulfide-based solid electrolyte material forming the solid electrolyte, a mixed molar ratio of $Li_2S$: $P_2S_5$ is in a range of, for example, ≥ 50:50 to ≤ 90:10.

In one or more embodiments, the sulfide-based solid electrolyte may be an argyrodite-type (kind) compound (e.g., an argyrodite compound) containing $Li_{7-a}M_aPS_{6-c}X_c$ ($0 \leq a \leq 2$ and $0 \leq c \leq 2$). Here, X may be F, Br, Cl, I, or a combination thereof. M may be scandium (Sc), yttrium (Y), titanium (Ti), zirconium (Zr), hafnium (Hf), vanadium (V), niobium (Nb), tantalum (Ta), chromium (Cr), molybdenum (Mo), tungsten (W), manganese (Mn), technetium (Tc), rhenium (Re), iron (Fe), ruthenium (Ru), osmium (Os), cobalt (Co), rhodium (Rh), iridium (Ir), nickel (Ni), palladium (Pd), platinum (Pt), copper (Cu), silver (Ag), gold (Au), zinc (Zn), cadmium (Cd), mercury (Hg), aluminum (Al), gallium (Ga), indium (In), thallium (Tl), silicon (Si), germanium (Ge), tin (Sn), lead (Pb), arsenic (As), antimony (Sb), bismuth (Bi), or a combination thereof.

The sulfide-based solid electrolyte may be an argyrodite-type (kind) compound including one or more selected from among $Li_{7-x}PS_{6-x}Cl_x$($0 \leq x \leq 2$), $Li_{7-x}PS_{6-x}Br_x$($0 \leq x \leq 2$), and $Li_{7-x}PS_{6-x}I_x$($0 \leq x \leq 2$). In one or more embodiments, the sulfide-based solid electrolyte may be an argyrodite-type (kind) compound including one or more selected from among $Li_6PS_5Cl$, $Li_6PS_5Br$, and $Li_6PS_5I$.

The argyrodite-type (kind) solid electrolyte (e.g., the argyrodite solid electrolyte) may have a density of ≥ 1.5 g/cc to ≤ 2.0 g/cc. Because the density of the argyrodite-type (kind) solid electrolyte is about 1.5 g/cc or greater, the internal resistance of the all-solid-state battery may decrease, and defects such as penetration and short circuit of a solid electrolyte film, caused by formation of lithium dendrites, may be prevented or reduced. The solid electrolyte may have an elastic modulus of, for example, ≥ 15 GPa to ≤ 35 GPa.

In one or more embodiments, the solid electrolyte layer 300 may further include a binder. The binder included in the solid electrolyte layer 300 may include, for example, a styrene butadiene rubber (SBR), polytetrafluoroethylene, polyvinylidene fluoride, polyethylene, and/or the like, but embodiments of the present disclosure are not limited thereto. The binder of the solid electrolyte layer 300 may be the same as or different from a binder included in the positive electrode active material layer 120 or a binder included in the coating layer 220.

FIG. 2 is a cross-sectional view of an all-solid-state battery 10 according to one or more embodiments of the present invention.

Referring to FIG. 2, in one or more embodiments, a solid electrolyte layer 300 may include a first solid electrolyte layer 310 and a second solid electrolyte layer 320. The first solid electrolyte layer 310 may be adjacent to a positive electrode layer 100, and the second solid electrolyte layer 320 may be adjacent to a negative electrode layer 200.

The first solid electrolyte layer 310 and the second solid electrolyte layer 320 may have different thicknesses. The first solid electrolyte layer 310 may have a first thickness TK1, and the second solid electrolyte layer 320 may have a second thickness TK2. The first thickness TK1 may be larger than the second thickness TK2. For example, the first thickness TK1 may be ≥ 2 times to ≤ 100 times the second thickness TK2.

FIG. 3 is a plan view of an all-solid-state battery 10 according to one or more embodiments of the present disclosure. FIG. 4 is a cross-sectional view according to the line A-A' of FIG. 3 according to one or more embodiments. In these embodiments, detailed description on technical characteristics overlapping what is described with reference to FIG. 1 and FIG. 2 will not be provided for conciseness, and the difference will be described in more detail.

Referring to FIG. 3 and FIG. 4, the area of a positive electrode layer 100 may be different from the area of a negative electrode layer 200. For example, the area of the negative electrode layer 200 may be larger than the area of the positive electrode layer 100. The positive electrode layer 100 may completely overlap in the negative electrode layer 200. For example, the positive electrode layer 100 may completely overlap with the negative electrode layer 200 in plan view.

According to one or more embodiments of the present disclosure, a first solid electrolyte layer 310 may have substantially the same area as that of the positive electrode layer 100. A second solid electrolyte layer 320 may have substantially the same area as that of the negative electrode layer 200.

For example, the first solid electrolyte layer 310 may have a first width WI1 in a first direction D1. The second solid electrolyte layer 320 may have a second width WI2 in the first direction D1. The first width WI1 may be smaller than the second width WI2. The first solid electrolyte layer 310 may have a third width WI3 in a second direction D2 crossing the first direction D1 (e.g., normal to the first direction D1). The second solid electrolyte layer 320 may have a fourth width WI4 in the second direction D2. The third width WI3 may be smaller than the fourth width WI4.

The all-solid-state battery 10 according to one or more embodiments may be produced by forming a first stacked body of the positive electrode layer 100 and the first solid electrolyte layer 310, and forming a second stacked body of the negative electrode layer 200 and the second solid electrolyte layer 320, and then laminating the first stacked body and the second stacked body.

FIG. 5 is a cross-sectional view according to the line A-A' of FIG. 3, illustrating an all-solid-state battery according to one or more embodiments of the present disclosure.

Referring to FIG. 5, in one or more embodiments, the negative electrode layer 200 of the all-solid-state battery 10 may further include a lithium metal layer 400 between a negative electrode current collector 210 and a coating layer 220. The thickness of the lithium metal layer 400 may further increase if (e.g., when) the all-solid-state battery 10 is charged. The coating layer 220 may serve as a protecting layer of the lithium metal layer 400, and at the same time, may suppress or reduce growth of lithium dendrites from the lithium metal layer 400.

The lithium metal layer 400 may be a metal thin film including lithium or a lithium alloy. The lithium alloy may be, for example, a Li-Al alloy, a Li-Sn alloy, a Li-In alloy, a Li-Ag alloy, a Li-Au alloy, a Li-Zn alloy, a Li-Ge alloy, a Li-Si alloy, and/or the like, but embodiments of the present disclosure are not limited thereto, and any alloy used as a lithium alloy may be used. In one or more embodiments, the lithium metal layer 400 may include one of these alloys or lithium. In one or more embodiments, the lithium metal layer 400 may include one or more suitable types (kinds) of alloys.

The lithium metal layer 400 may have a fifth width WI5 in the first direction D1. The fifth width WI5 may be equal to or larger than the first width WI1. The fifth width WI5 may be equal to or smaller than the second width WI2. For example, in one or more embodiments, the fifth width WI5 may be larger than the first width WI1, and smaller than the second width WI2.

FIG. 6 is a cross-sectional view of an all-solid-state battery 10 according to one or more embodiments of the present disclosure.

Referring to FIG. 6, in one or more embodiments, the all-solid-state battery 10 may include a gasket structure 500. The gasket structure 500 may fill a step on a side surface of the all-solid-state battery 10 caused by a difference in area between a first stacked body and a second stacked body.

Referring to FIG. 3, the gasket structure 500 may surround side surfaces of the first stacked body of the all-solid-state battery 10 in the first and second directions D1 and D2. For example, the thickness of the gasket structure 500 may be substantially equal to the thickness of the first stacked body. Accordingly, even though the first stacked body and the second stacked body, which have different areas, are stacked and pressed, damage on the step of the side surface of the all-solid-state battery may be prevented or reduced. The 'substantially equal thickness' may be defined as the thickness sufficient to prevent or reduce damage on the step of the side surface of the all-solid-state battery even though the first stacked body and the second stacked body having different areas are stacked and pressed.

## Positive Electrode Active Material Layer

FIG. 7 is an enlarged cross-sectional view illustrating a portion of the positive electrode active material layer 120 (see FIG. 1) according to one or more embodiments of the present disclosure. FIG. 7 is an enlarged view illustrating region M of FIG. 1 according to one or more embodiments.

Referring to FIG. 7, the positive electrode active material layer 120 according to the present disclosure may include a positive electrode active material CAM (e.g., in a form of particles), a conductive material CDM, a binder BID, a sulfide-based solid electrolyte SEL (e.g., in a form of particles), a phosphine-based additive PHA, and a binder-modifying material BMD. The positive electrode active material layer 120 may be produced by applying a positive electrode slurry, to be described later, onto the positive electrode current collector 110.

The positive electrode active material CAM may be a material capable of reversibly absorbing and desorbing lithium ions. The positive electrode active material CAM may include, for example, a lithium transition metal oxide such as lithium cobalt oxide (LCO), lithium nickel oxide, lithium nickel cobalt oxide, lithium nickel cobalt aluminum oxide (NCA),

lithium nickel cobalt manganese oxide (NCM), lithium manganate, lithium iron phosphate, and/or the like, nickel sulfide, copper sulfide, lithium sulfide, iron oxide, vanadium oxide, and/or the like, but embodiments of the present disclosure are not necessarily limited thereto. The positive electrode active material may be a single material or a mixture of two or more materials thereof.

The lithium transition metal oxide may be a compound expressed by any one selected from among, for example, $Li_aA_{1-b}B_bD_2$($0.90 \le a \le 1$ and $0 \le b \le 0.5$), $Li_aE_{1-b}B_bO_{2-c}D_c$($0.90 \le a \le 1$, $0 \le b \le 0.5$, and $0 \le c \le 0.05$), $LiE_{2-b}B_bO_{4-c}D_c$($0 \le b \le 0.5$ and $0 \le c \le 0.05$), $Li_aNi_{1-b-c}Co_bB_cO_\alpha$($0.90 \le a \le 1$, $0 \le b \le 0.5$, $0 \le c \le 0.05$, and $0 < \alpha < 2$), $Li_aNi_{1-b-c}Co_bB_cO_{2-\alpha}F_\alpha$($0.90 \le a \le 1$, $0 \le b \le 0.5$, $0 \le c \le 0.05$, and $0 < \alpha < 2$), $Li_aNi_{1-b-c}Mn_bB_cD_\alpha$($0.90 \le a \le 1$ and $0 \le b \le 0.5$, $0 \le c \le 0.05$, and $0 < \alpha \le 2$), $Li_aNi_{1-b-c}Mn_bB_cO_{2-\alpha}F_\alpha$ ($0.90 \le a \le 1$, $0 \le b \le 0.5$, $0 \le c \le 0.05$, and $0 < \alpha < 2$), $Li_aNi_bE_cG_dO_2$($0.90 \le a \le 1$, $0 \le b \le 0.9$, $0 \le c \le 0.5$, and $0.001 \le d \le 0.1$), $LI_aNi_{b-}Co_cMn_dG_eO_2$($0.90 \le a \le 1$, $0 \le b \le 0.9$, $0 \le c \le 0.5$, $0 \le d \le 0.5$, and $0.001 \le e \le 0.1$), $Li_aNiG_bO_2$($0.9 \le a \le 1$ and $0.001 \le b \le 0.1$), $Li_{a-}CoG_bO_2$($0.90 \le a \le 1$ and $0.001 \le b \le 0.1$), $Li_aMnG_bO_2$($0.90 \le a \le 1$ and $0.001 \le b \le 0.1$), $Li_aMn_2G_bO_4$($0.90 \le a \le 1$ and $0.001 \le b \le 0.1$), $QO_2$, $QS_2$, $LiQS_2$, $V_2O_5$, $LiV_2O_5$, $LiIO_2$, $LiNiVO_4$, $Li_{3-f}J_2(PO_4)_3$($0 \le f \le 2$), $Li_{3-f}Fe_2(PO_4)_3$($0 \le f \le 2$), and $LiFePO_4$. In these compounds, the capital letter "A" may be nickel (Ni), cobalt (Co), manganese (Mn), or a combination thereof, the capital letter "B" may be aluminum (Al), Ni, Co, Mn, chromium (Cr), iron (Fe), magnesium (Mg), strontium (Sr), vanadium (V), a rare-earth element, or a combination thereof, the capital letter "D" may be oxygen (O), fluorine (F), sulfur (S), phosphorus (P), or a combination thereof, the capital letter "E" may be Co, Mn, or a combination thereof, the capital letter "F" may be fluorine (F), sulfur (S), phosphorus (P), or a combination thereof, the capital letter "G" may be Al, Cr, Mn, Fe, Mg, lanthanum (La), cerium (Ce), Sr, V, or a combination thereof, the capital letter "Q" may be titanium (Ti), Mo, Mn, or a combination thereof, the capital letter "I" may be Cr, V, Fe, scandium (Sc), yttrium (Y), or a combination thereof, and the capital letter "J" may be V, Cr, Mn, Co, Ni, copper (Cu), or a combination thereof.

For example, in one or more embodiments, the positive electrode active material CAM may include a lithium salt of transition metal oxide, which has a layered rock salt type (kind) structure, among the above-described lithium transition metal oxides. The "layered rock salt type (kind) structure" may be, for example, a cubic rock salt type (kind) structure in which oxygen atomic layers and metal atomic layers are alternately and regularly arranged in a <111> direction, and accordingly, each atomic layer forms a two-dimensional plane. The "cubic rock salt type (kind) structure" may have a sodium chloride type (kind) (NaCl type (kind)) structure that is a type (kind) of crystal structure, for example, may have a structure in which face centered cubic lattices (fcc) respectively formed by positive ions and negative ions are arranged to be offset from each other by 1/2 of a ridge of a unit lattice. The lithium transition metal oxide having this layered rock salt type (kind) structure may be a ternary lithium transition metal oxide, for example $LiNi_xCo_yAl_zO_2$ (NCA), $LiNi_xCo_yMn_zO_2$ (NCM) ($0<x<1$, $0<y<1$, $0<z<1$, and $x+y+z=1$), and/or the like. In an embodiment in which the positive electrode active material CAM includes the ternary lithium transition metal oxide having the layered rock salt type (kind) structure, the all-solid-state battery 10 may have increased energy density and improved thermal stability.

The above-described compound included in the positive electrode active material CAM may be covered by a covering layer. For example, the above-described compound included in the positive electrode active material CAM may be in the form of particles, each of which may be covered by the covering layer. In the positive electrode active material CAM, the above-described compound in the form of particles and a compound composing the covering layer being added may be mixed and used. In one or more embodiments, the covering layer added to a surface of the positive electrode active material CAM may include, for example, an oxide, a hydroxide, an oxyhydroxide, an oxycarbonate, or a hydroxycarbonate of a coating element. The compound composing the covering layer may be amorphous or crystalline. The coating element included in the covering layer may include Mg, Al, Co, K, Na, Ca, Si, Ti, V, Sn, Ge, Ga, B, As, Zr, or a mixture thereof. In one or more embodiments, the covering layer may include, for example, $Li_2O-ZrO_2$ (LZO), and/or the like. A method of forming the covering layer may be selected within a range that does not adversely affect the property of the positive electrode active material CAM. The method of forming the covering layer may include, for example, spray coating, a soaking method, and/or the like.

If (e.g., when) the positive electrode active material CAM includes nickel (Ni) as a transition metal element of a ternary lithium transition metal oxide, for example, NCA, NCM, and/or the like, the capacity density of the all-solid-state battery 10 may be increased, and thus, elution of metal in the positive electrode active material CAM may be reduced in a charge state. Consequently, cycle characteristics in the charge state of the all-solid-state battery 10 may be improved. Meanwhile, the "cycle characteristics" refers to characteristics representing the level of deterioration of the all-solid-state battery 10 caused by charging/discharging of the all-solid-state battery 10, and the all-solid-state battery 10 having high cycle characteristics may have a low level of deterioration in the all-solid-state battery 10 caused by charging/discharging, and the all-solid-state battery 10 having low cycle characteristics may have a high level of deterioration in the all-solid-state battery 10 caused by the charging/discharging.

A shape of the positive electrode active material CAM may include, for example, a shape of particles in sphere, an oval, and/or the like. The particle diameter and content (e.g., amount) of the positive electrode active material CAM are not particularly limited.

The positive electrode active material layer 120 may include the positive electrode active material CAM in an amount of $\ge 75$ parts by weight to $\le 95$ parts by weight on the basis of the total 100 parts by weight of the positive electrode

active material CAM, the conductive material CDM, and the binder BID.

The positive electrode active material layer 120 may include the conductive material CDM. The conductive material CDM may have conductivity (e.g., electric conductivity) while not causing chemical change in the all-solid-state battery 10, and may thus increase conductivity (e.g., electric conductivity) of the positive electrode active material CAM and the sulfide-based solid electrolyte SEL.

The conductive material CDM may include a carbon-based material. The conductive material CDM may include one or more selected from among, for example, graphite, carbon black, acetylene black, a carbon nanofiber, and a carbon nanotube.

The positive electrode active material layer 120 may include the conductive material CDM in an amount of ≥ 0.05 parts by weight to ≤ 5 parts by weight on the basis of the total 100 parts by weight of the positive electrode active material CAM, the conductive material CDM, and the binder BID.

The positive electrode active material layer 120 may include the sulfide-based solid electrolyte SEL.

The sulfide-based solid electrolyte SEL may have a particle shape (e.g., in a form of particles). The sulfide-based solid electrolyte SEL may be dispersed between the positive electrode active materials CAM. The sulfide-based solid electrolyte SEL, which is excellent or suitable in characteristics of lithium ionic conductivity, may include at least one selected from among, for example, $Li_2S$-$P_2S_5$, $Li_2S$-$P_2S_5$-LiX (X is a halogen element), $Li_2S$-$P_2S_5$-$Li_2O$, $Li_2S$-$P_2S_5$-$Li_2O$-LiI, $Li_2S$-$SiS_2$, $Li_2S$-$SiS_2$-LiI, $Li_2S$-$SiS_2$-LiBr, $Li_2S$-$SiS_2$-LiCl, $Li_2S$-$SiS_2$-$B_2S_3$-LiI, $Li_2S$-$SiS_2$-$P_2S_5$-LiI, $Li_2S$-$B_2S_3$, $Li_2S$-$P_2S_5$-$Z_mS_n$ (m and n are each a positive number, and the capital letter "Z" is one of Ge, Zn, or Ga.), $Li_2S$-$GeS_2$, $Li_2S$-$SiS_2$-$Li_3PO_4$, $Li_2S$-$SiS_2$-$Li_pMO_q$ (p and q are each a positive number, and the capital letter "M" is one of P, Si, Ge, B, Al, Ga, or In), $Li_{7-x}PS_{6-x}Cl_x(0\leq x\leq 2)$, $Li_{7-x}PS_{6-x}Br_x(0\leq x\leq 2)$, and $Li_{7-x}PS_{6-x}I_x(0\leq x\leq 2)$.

In one or more embodiments, the sulfide-based solid electrolyte SEL may be an argyrodite-type (kind) compound including one or more selected from among $Li_{7-x}PS_{6-x}Cl_x(0\leq x\leq 2)$, $Li_{7-x}PS_{6-x}Br_x(0\leq x\leq 2)$, and $Li_{7-x}PS_{6-x}I_x(0\leq x\leq 2)$. In one or more embodiments, the sulfide-based solid electrolyte may be an argyrodite-type (kind) compound including one or more selected from among $Li_6PS_5Cl$, $Li_6PS_5Br$, and $Li_6PS_5I$.

In one or more embodiments, the sulfide-based solid electrolyte SEL may be an argyrodite-type (kind) compound including $Li_{7-a}M_aPS_{6-c}X_c$($0\leq a\leq 2$ and ($0\leq c\leq 2$)). Here, X may be F, Br, Cl, or a combination thereof. M may be scandium (Sc), yttrium (Y), titanium (Ti), zirconium (Zr), hafnium (Hf), vanadium (V), niobium (Nb), tantalum (Ta), chromium (Cr), molybdenum (Mo), tungsten (W), manganese (Mn), technetium (Tc), rhenium (Re), iron (Fe), ruthenium (Ru), osmium (Os), cobalt (Co), rhodium (Rh), iridium (Ir), nickel (Ni), palladium (Pd), platinum (Pt), copper (Cu), silver (Ag), gold (Au), zinc (Zn), cadmium (Cd), mercury (Hg), aluminum (Al), gallium (Ga), indium (In), thallium (Tl), silicon (Si), germanium (Ge), tin (Sn), lead (Pb), arsenic (As), antimony (Sb), bismuth (Bi), or a combination thereof.

The argyrodite-type (kind) solid electrolyte may have a density of ≥ 1.5 g/cc to ≤ 2.0 g/cc. Because the density of the argyrodite-type (kind) solid electrolyte is about 1.5 g/cc or greater, the internal resistance of the all-solid-state battery 10 may decrease, and defects such as penetration and short circuit of a solid electrolyte film, caused by formation of lithium dendrites, may be prevented or reduced.

In one or more embodiments, the sulfide-based solid electrolyte SEL may have an elastic modulus of, for example, ≥ 15 GPa to ≤ 35 GPa. The sulfide-based solid electrolyte SEL may be the same as the solid electrolyte included in the above-described solid electrolyte layer 300.

The sulfide-based solid electrolyte SEL included in the positive electrode active material layer 120 may have a smaller medium-size average particle diameter ($D_{50}$) than that of the solid electrolyte included in the solid electrolyte layer 300. For example, the medium-size average particle diameter ($D_{50}$) of the sulfide-based solid electrolyte SEL included in the positive electrode active material layer 120 may be about 90 % or less, about 80 % or less, about 70 % or less, about 60 % or less, about 50 % or less, about 40 % or less, about 30 % or less, or about 20 % or less of the medium-size average particle diameter $D_{50}$ of the solid electrolyte included in the solid electrolyte layer 300. In one or more embodiments, the medium-size average particle diameter ($D_{50}$) may be a median diameter measured using a laser diffraction particle size analyzer.

The average particle diameter ($D_{50}$) of the sulfide-based solid electrolyte SEL may be about 1 μm or less, about 0.9 μm or less, about 0.5 μm or less, or about 0.1 μm or less. In one or more embodiments, the average particle diameter ($D_{50}$) of the solid electrolyte SEL may be, for example, ≥ 10 nm to ≤ 1 μm, ≥ 10 nm to ≤ 0.9 μm, or ≥ 10 nm to ≤ 0.1 μm.

The positive electrode active material layer 120 may include the sulfide-based solid electrolyte SEL in an amount of ≥ 5 parts by weight to ≤ 25 parts by weight on the basis of the total 100 parts by weight of the positive electrode active material CAM, the conductive material CDM, and the binder BID.

The positive electrode active material layer 120 may include the binder BID. The binder BID may include a material for binding the positive electrode active material CAM, the sulfide-based solid electrolyte SEL, the conductive material CDM, and/or the like, included in the positive electrode active material layer 120, and for improving adhesive force with the positive electrode current collector 110.

In one or more embodiments, the binder BID may include a fluoride-based binder.

The fluoride-based binder may include at least one of, for example, polyvinylidene fluoride, polyvinylidene

fluoride-co-hexafluoropropylene (PVdF-HFP), polyvinylidene fluoride-co-trichloroethylene, polyvinylidene fluoride-co-tetrafluoroethylene, polyvinylidene fluoride-co-trifluoroethylene, polyvinylidene fluoride-co-trifluorochloroethylene, polyvinylidene fluoride-co-ethylenefluoride-hexafluoropropylene, or polyvinylidene fluoride-co-trichloroethylene.

The positive electrode active material layer 120 may include the binder BID in an amount of ≥ 0.5 parts by weight to ≤ 5 parts by weight on the basis of the total 100 parts by weight of the positive electrode active material CAM, the conductive material CDM, and the binder BID. If (e.g., when) the amount of the binder BID falls below the above range, dispersion effect of the binder BID may decrease. If (e.g., when) the amount of the binder BID is greater than the above range, clogging of the binder BID may cause reduction in slurry phase stability.

Meanwhile, the fluoride-based binder is excellent or suitable as a binding agent for integrating the materials, but is poor in adhesion with a current collector metal such as copper. Accordingly, in the all-solid-state battery 10 having an electrode with the fluoride-based binder being used, repetitive charging and discharging may cause separation of a material, such as an active material, from the current collector, thereby reducing the battery capacity, which is a problem of reducing the cycle life of the all-solid-state battery.

To address the problem, the positive electrode active material layer 120 according to the present disclosure may include the phosphine-based additive PHA.

The phosphine-based additive PHA may improve processibility, stability, and performance of the all-solid-state battery 10.

The phosphine-based additive PHA may include a compound represented by Formula 1:

## Formula 1

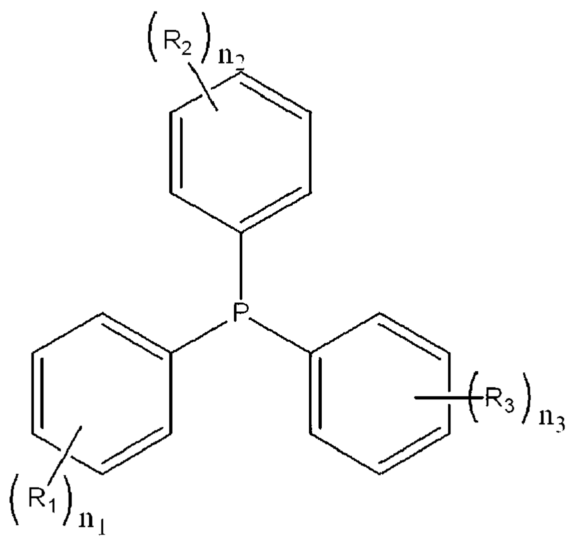

In Formula 1,

$n_1$ to $n_3$ may each independently be 0 to 5, and
$R_1$ to $R_3$ may each independently be hydrogen, a halogen, a nitrile group, a nitro group, an amine group, a substituted or unsubstituted C1 to C10 alkyl group, a substituted or unsubstituted C1 to C10 alkoxy group, a substituted or unsubstituted aryl group, or a substituted or unsubstituted C5 to C14 heteroaryl group.

For example, in one or more embodiments, the phosphine-based additive PHA may include at least one selected from the group consisting of triphenyl phosphine, tris(4-trifluoromethylphenyl)phosphine, tris(4-fluorophenyl)phosphine, tris[3,5-bis(trifluoromethyl)phenyl]phosphine, tris(4-chlorophenyl)phosphine, tris(2,4,6-trimethylphenyl)phosphine, tris(4-methoxyphenyl)phosphine, tris(pentafluorophenyl)phosphine, tris(4-methoxy-3,5-dimethylphenyl)phosphine, tris(3,5-dimethylphenyl)phosphine, tri(o-tolyl)phosphine, diphenyl(p-tolyl)phosphine, and combinations thereof.

For example, as the phosphine-based additive PHA, triphenyl phosphine favorable to a reaction to polysulfide ($S_x$) may be used.

The positive electrode active material layer 120 may include the phosphine-based additive PHA in an amount of ≥ 0.01 parts by weight to ≤ 3 parts by weight on the basis of the total 100 parts by weight of the positive electrode active material CAM, the conductive material CDM, and the binder BID. If (e.g., when) the amount of the phosphine-based additive PHA is excessive, the resistance of an electrode plate may increase, so that the performance of the battery may

deteriorate. If (e.g., when) the amount falls within the above-mentioned numerical ranges, the positive electrode active material layer 120 may exhibit effects of comprehensively improved performance, such as processibility in production, stability, and capacity.

A weight ratio of the phosphine-based additive PHA to the sulfide-based solid electrolyte SEL may be ≥ 0.2 to ≤ 25. For example, in one or more embodiments, the weight ratio of the phosphine-based additive PHA to the sulfide-based solid electrolyte SEL may be ≥ 0.3 to ≤ 24, ≥ 0.4 to ≤ 23, or ≥ 0.45 to ≤ 22.5. If the weight ratio is too low, falling out of the above range, a product generated by the reaction to the sulfide-based solid electrolyte SEL may be difficult to obtain, and if the weight ratio is too high, unreacted substances may remain in excessive amounts in the positive electrode active material layer 120. In addition, slurry gelation may cause a large amount of scattering in production of an electrode plate.

Because the sulfide-based solid electrolyte SEL and the phosphine-based additive PHA have the above weight ratio, a sufficient amount of binder-modifying material BMD, which will be described later, may be secured in the positive electrode active material layer 120.

The positive electrode active material layer 120 according to one or more embodiments may include the binder-modifying material BMD.

The binder-modifying material BMD may be a product obtained by reaction of the phosphine-based additive PHA and an elution material of the sulfide-based solid electrolyte SEL.

Because the phosphine-based additive PHA is included in the positive electrode active material layer 120 in a particular content (e.g., amount) range, the phosphine-based additive PHA may react with the elution material of the sulfide-based solid electrolyte SEL optimally to obtain the binder-modifying material BMD.

The sulfide-based solid electrolyte SEL may be dissolved in a polar solvent in a wet process, so that an alkali metal, sulfide, and/or the like, among the component elements included in the sulfide-based solid electrolyte SEL, may be released out of the surface of the sulfide-based solid electrolyte SEL as the elution materials. The phosphine-based additive PHA according to the present disclosure may then react to the sulfide, among the above sulfide-based elution materials, which is unstable in the atmosphere and the polar solvent, so that the binder-modifying material BMD may be generated.

The binder-modifying material BMD generated by the reaction of the phosphine-based additive PHA and the sulfide-based elution material may be a sulfide-based material.

For example, in one or more embodiments, the binder-modifying material BMD may include at least one selected from the group consisting of substituted or unsubstituted triphenylphosphine sulfide (e.g., $C_{18}H_{15}PS$), phosphorous sulfide, lithium sulfide ($Li_2S$), or a combination thereof.

The positive electrode active material layer 120 may include the binder-modifying material BMD in an amount of ≥ 0.0001 parts by weight to ≤ 1 part by weight on the basis of the total 100 parts by weight of the positive electrode active material CAM, the conductive material CDM, and the binder BID.

Radicals may be generated during a process of generating the binder-modifying material BMD by the reaction of the phosphine-based additive PHA and the sulfide-based elution material, and the radicals may interact with the binder BID to modify the structure of fluoride-based binder, thereby improving adhesion performance. Accordingly, the modified fluoride-based binder may have strong adhesiveness, and may strongly bind the positive electrode active material to a metal current collector (i.e., to positive electrode current collector).

Other than the above-described positive electrode active material CAM, the conductive material CDM, the binder BID, the sulfide-based solid electrolyte SEL, the phosphine-based additive PHA, and the binder-modifying material BMD, the positive electrode active material layer 120 may further include an additive such as a filler, a coating agent, a dispersant, an ionic conductivity auxiliary material, and/or the like.

For example, in one or more embodiments, the positive electrode active material layer 120 may be produced by providing a mixture, in which materials included in the positive electrode active material layer 120 are dispersed, onto the positive electrode current collector 110. Because the materials included in the positive electrode active material layer 120 includes the binder BID and the phosphine-based additive PHA, stable dispersibility may be achieved, and adhesive force of the positive electrode active material layer 120 may be improved.

According to one or more embodiments, because the positive electrode active material layer 120 includes the phosphine-based additive PHA that is capable of causing structural deformation/modification in the binder BID, adhesion characteristics between the positive electrode active material layer 120 and the positive electrode current collector 110 may be improved, so that output characteristics and capacity of the all-solid-state battery 10 may be improved.

Hereinafter, a positive electrode slurry according to one or more embodiments of the present disclosure and a method for producing the same will be described.

## Positive Electrode Slurry and Method for Producing the Same

Hereinafter, a method for producing a positive electrode slurry for an all-solid-state battery according to one or more embodiments will be described.

The method for producing a positive electrode slurry for an all-solid-state battery, according to one or more embodiments of the present disclosure, may include mixing a positive electrode active material CAM, a conductive material CDM, a binder BID, a sulfide-based solid electrolyte SEL, a phosphine-based additive PHA, and a solvent.

The positive electrode active material CAM, the conductive material CDM, the binder BID, the sulfide-based solid electrolyte SEL, the phosphine-based additive PHA, and the solvent are added to a container, and mixed to prepare the positive electrode slurry.

For the mixing method, any method that may be used by those skilled in the art, such as a wet or dry method, may be used, and is not limited to a particular method.

For example, in one or more embodiments, the mixing may be performed by using a mixer or a kneader. According to one or more embodiments of the present disclosure, the mixing may be performed at ≥ 20 °C to ≤ 60 °C for ≥ 10 minutes to ≤ 90 minutes using a planetary disperser mixer (PD mixer), a planetary mixer, a paddle mixer, a ribbon mixer, a dual shaft mixer, a high-speed impeller mixer, or a propeller mixer.

According to one or more embodiments of the present disclosure, the mixing may be performed by using the PD mixer. When the mixing is performed by using the PD mixer, an RPM speed may be ≥ 60 to ≤ 150.

In the method for producing the positive electrode slurry, the materials previously described may be used for the positive electrode active material CAM, the conductive material CDM, the binder BID, the sulfide-based solid electrolyte SEL, and the phosphine-based additive PHA, respectively.

The positive electrode active material CAM according to one or more embodiments may be a powder-type (kind) positive electrode active material (e.g., in a form of particles). The positive electrode active material may include, for example, a lithium transition metal oxide such as lithium cobalt oxide LCO, lithium nickel oxide, lithium nickel cobalt oxide, lithium nickel cobalt aluminum oxide (NCA), lithium nickel cobalt manganese oxide (NCM), lithium manganate, lithium iron phosphate, and/or the like, nickel sulfide, copper sulfide. lithium sulfide, iron oxide, vanadium oxide, and/or the like, but embodiments of the present disclosure are not necessarily limited thereto. The positive electrode active material CAM may be a single material or a mixture of two or more materials thereof.

The conductive material CDM may include a carbon-based material. in one or more embodiments, the conductive material CDM may include one or more selected from among, for example, graphite, carbon black, acetylene black, a carbon nanofiber, and a carbon nanotube.

The binder BID may include a material for improving binding force and dispersibility of the positive electrode active material CAM and the sulfide-based solid electrolyte SEL.

The binder BID according to one or more embodiments may include a fluoride-based binder. The fluoride-based binder may be, for example, one or more selected from among polyvinylidene fluoride, polyvinylidene fluoride-co-hexafluoropropylene (PVdF-HFP), polyvinylidene fluoride-co-trichloroethylene, polyvinylidene fluoride-co-tetrafluoroethylene, polyvinylidene fluoride-co-trifluoroethylene, polyvinylidene fluoride-co-trifluorochloroethylene, polyvinylidene fluoride-co-ethylenefluoride-hexafluoropropylene, and/or polyvinylidene fluoride-co-trichloroethylene.

The sulfide-based solid electrolyte SEL according to one or more embodiments may be a powder type (kind) (e.g., in a form of particles). The sulfide-based solid electrolyte SEL may be an argyrodite-type (kind) compound including one or more selected from among, for example, $Li_{7-x}PS_{6-x}Cl_x(0\leq x\leq 2)$, $Li_{7-x}PS_{6-x}Br_x(0\leq x\leq 2)$, and $Li_{7-x}PS_{6-x}I_x(0\leq x\leq 2)$. In one or more embodiments, the solid electrolyte may be an argyrodite-type (kind) compound including one or more selected from among $Li_6PS_5Cl$, $Li_6PS_5Br$, and $Li_6PS_5I$.

An amount of the sulfide-based solid electrolyte SEL in the positive electrode slurry may be ≥ 5 parts by weight to ≤ 25 parts by weight on the basis of the total 100 parts by weight of the positive electrode active material CAM, the conductive material CDM, and the binder BID.

In the method for producing the positive electrode slurry according to one or more embodiments, the phosphine-based additive PHA may be added. Because the phosphine-based additive PHA is same as previously described, detailed description thereof will be simplified.

The phosphine-based additive PHA according to one or more embodiments may be a compound represented by Formula 1:

## Formula 1

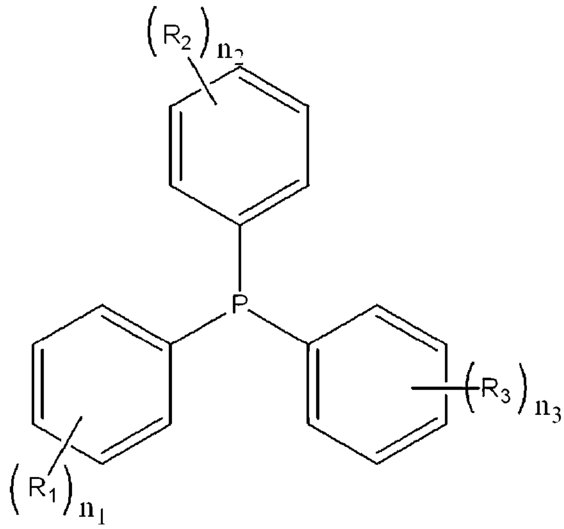

In Formula 1,

$n_1$ to $n_3$ may each independently be 0 to 5, and
$R_1$ to $R_3$ may each independently be hydrogen, a halogen, a nitrile group, a nitro group, an amine group, a substituted or unsubstituted C1 to C10 alkyl group, a substituted or unsubstituted C1 to C10 alkoxy group, a substituted or unsubstituted aryl group, or a substituted or unsubstituted C5 to C14 heteroaryl group.

For example, the phosphine-based additive PHA may include at least one selected from the group consisting of triphenyl phosphine, tris(4-trifluoromethylphenyl)phosphine, tris(4-fluorophenyl)phosphine, tris[3,5-bis(trifluoromethyl) phenyl]phosphine, tris(4-chlorophenyl)phosphine, tris(2,4,6-trimethylphenyl)phosphine, tris(4-methoxyphenyl)phosphine, tris(pentafluorophenyl)phosphine, tris(4-methoxy-3,5-dimethylphenyl)phosphine, tris(3,5-dimethylphenyl)phosphine, tri(o-tolyl)phosphine, diphenyl(p-tolyl)phosphine, and combinations thereof.

An amount of the phosphine-based additive PHA in the positive electrode slurry may be $\geq$ 0.01 parts by weight to $\leq$ 3 parts by weight on the basis of the total 100 parts by weight of the positive electrode active material CAM, the conductive material CDM, and the binder BID.

The solvent may include one or more solvent selected from the group consisting of ethyl acetate, hexyl butyrate, water ($H_2O$), alcohol, formic acid, acetic acid, tetrahydrofuran, dimethylformamide, acetonitrile, dimethyl sulfoxide, acetone, dimethoxy ethane, 1,3-dioxolane, N-methylpyrrolidinone, N-methylformamide, diethyl carbonate, ethylmethyl carbonate, and dimethyl carbonate.

An amount of the solvent in the positive electrode slurry may be $\geq$ 15 parts by weight to $\leq$ 50 parts by weight on the basis of the total 100 parts by weight of the positive electrode active material CAM, the conductive material CDM, and the binder BID.

In one or more embodiments, the solvent may include ethyl acetate which facilitates surface elution of the sulfide-based solid electrolyte SEL, or hexyl butyrate which has a vapor pressure appropriate or suitable for a slurry process.

A mixed ratio of the phosphine-based additive PHA to the sulfide-based solid electrolyte SEL in the positive electrode slurry may be a weight ratio of $\geq$ 0.2 to $\leq$ 25. For example, in one or more embodiments, the weight ratio of the phosphine-based additive PHA to the sulfide-based solid electrolyte SEL may be $\geq$ 0.3 to $\leq$ 24, $\geq$ 0.4 to $\leq$ 23, or $\geq$ 0.45 to $\leq$ 22.5.

The positive electrode slurry may further include a product generated by reaction of the phosphine-based additive PHA and an elution material of the sulfide-based solid electrolyte SEL. The product may include a binder-modifying material BMD.

The "product" refers to an intermediate reaction product obtained between the solvent, the sulfide-based solid electrolyte SEL, and the phosphine-based additive PHA in a mixing process.

The binder-modifying material BMD may modify the structure of fluoride-based binder to improve adhesion performance.

For example, the binder-modifying material BMD may include at least one selected from the group consisting of substituted or unsubstituted triphenylphosphine sulfide (e.g., $C_{18}H_{15}PS$), phosphorous sulfide, lithium sulfide ($Li_2S$), or a combination thereof.

An amount of the binder-modifying material BMD in the positive electrode slurry may be $\geq$ 0.0001 parts by weight

to ≤ 1 part by weight on the basis of the total 100 parts by weight of the positive electrode active material CAM, the conductive material CDM, and the binder BID.

After the positive electrode slurry, produced in the above production method, is applied onto the positive electrode current collector 110 and dried, rolling may be performed to form the positive electrode active material layer 120. In one or more embodiments, the thickness of the positive electrode active material layer 120 may be ≥ 10 μm to ≤ 30 μm, ≥ 5 μm to ≤ 30 μm, ≥ 10 μm to ≤ 20 μm, ≥ 10 μm to ≤ 40 μm, ≥ 20 μm to ≤ 50 μm, or ≥ 40 μm to ≤ 50 μm.

Because the phosphine-based additive PHA is added to the positive electrode slurry according to one or more embodiments, the problem that a material such as an active material is separated from the current collector, during production of the positive electrode, may be solved.

Consequently, the positive electrode slurry according to one or more embodiments may have electrical property with improved dispersibility as well as adhesive force. Therefore, the all-solid-state battery produced using the positive electrode slurry of the present disclosure may have excellent or suitable performance.

Hereinafter, the present disclosure will be described in more detail with reference to examples. However, the examples are merely presented to exemplify the present disclosure, and the scope of the present disclosure is not limited thereto.

**Production of Positive Electrode Slurry**

**Example 1**

A sulfide-based solid electrolyte ($Li_6PS_5Cl_{0.5}Br_{0.5}$) and a phosphine-based additive (triphenyl phosphine, $PPh_3$) were added to a solvent (octyl acetate) to prepare a mixture. A content (e.g., amount) ratio of the phosphine-based additive to the sulfide-based solid electrolyte was about 0.45 in the produced mixture.

The mixture was dispersed in the total 100 parts by weight of a positive electrode active material ($LiNi_{0.94}Co_{0.04}Al_{0.02}O_2$), a binder (PVdF-HFP), and a conductive material (carbon nanotube) to finally produce a positive electrode slurry.

The produced positive electrode slurry was applied onto an aluminum foil, which was used as a positive electrode current collector, and then dried at a temperature of about 150 °C for about 2 hours to produce a positive electrode.

**Example 2**

A positive electrode slurry and a positive electrode were each produced in substantially the same manner as that of Example 1, except that the content (e.g., amount) ratio of the phosphine-based additive to the sulfide-based solid electrolyte was changed to 2.31.

**Example 3**

A positive electrode slurry and a positive electrode were each produced in substantially the same manner as that of Example 1, except that the content (e.g., amount) ratio of the phosphine-based additive to the sulfide-based solid electrolyte was changed to 6.92.

**Example 4**

A positive electrode slurry and a positive electrode were each produced in substantially the same manner as that of Example 1, except that the content (e.g., amount) ratio of the phosphine-based additive to the sulfide-based solid electrolyte was changed to 22.32.

**Comparative Example 1**

A positive electrode slurry and a positive electrode were each produced in substantially the same manner as that of Example 1, except that the phosphine-based additive was not added.

**Comparative Example 2**

A positive electrode slurry and a positive electrode were each produced in substantially the same manner as that of Example 1, except that the content (e.g., amount) ratio of the phosphine-based additive to the sulfide-based solid electrolyte was changed to 37.20.

The compositions of the positive electrode slurries produced according to the examples and comparative examples are listed in detail in Table 1.

Table 1

| Classification | Positive electrode active material + conductive material+ binder (parts by weight) | Content ratio of phosphine-based additive to sulfide-based solid electrolyte (%) |
|---|---|---|
| Example 1 | 100 | 0.45 |
| Example 2 | 100 | 2.31 |
| Example 3 | 100 | 6.92 |
| Example 4 | 100 | 22.32 |
| Comparative Example 1 | 100 | 0 |
| Comparative Example 2 | 100 | 37.20 |

**Evaluation Example 1: Adhesive Force of Positive Electrode**

Adhesive force between a positive electrode active material layer and a positive electrode current collector for each of the positive electrodes, produced according to the examples and comparative examples, was measured, and the results are listed in Table 2.

In particular, the positive electrode produced according to each of the examples and comparative examples was cut into a size of about 150 mm length and about 20 mm width, and a surface of the positive electrode was attached to a slide glass of about 75 mm length and about 25 mm width in a length direction using a double-sided tape. For example, the slide glass was attached to a region corresponding to a half of the length direction of the positive electrode.

Then, a roller was rubbed 10 times so that the double-sided tape was attached uniformly (e.g., substantially uniformly), and an evaluation sample was prepared therefrom. Next, the slide glass area of the evaluation sample was fixed to a sample stage of a universal testing machine (UTM, product name: LS5, manufacturer: LLOYD), and a half of the positive electrode not attached to the slide glass was connected to a load cell of the UTM machine. The load cell was moved up to ≤ 50 mm by applying force at about 90° and a speed of about 100 mm/min, and the weight applied to the load cell was measured. At this time, during the moving section, the average value of the weights measured in a section of ≥ 20 mm to ≤ 40 mm was calculated, and the calculation was repeated 5 times to obtain the average value thereof, and the obtained value was evaluated as a positive electrode adhesion (gf/mm) of each sample.

**Evaluation Example 2: Peel Strength**

The peel strength of the positive electrode produced according to each of the examples and comparative examples was evaluated. In particular, a surface and interfacial cutting analysis system (SAICAS) machine was used to measure the peel strength by cutting the positive electrode with a blade to separate a lower part (positive electrode current collector) and an upper part (positive electrode active material layer). Evaluation results on the measured peel strength are listed in Table 2.

**Evaluation Example 3: Bending Strength**

The bending strength (3-point bending test) of each of positive electrode plates, produced according to the examples and comparative examples, was measured in a method equivalent to ASTM D790.

In particular, the positive electrode plate, produced according to each of the examples and comparative examples, was cut into a size of about 15 mm x about 20 mm to prepare a sample. In the 3-point bending method, the sample was arranged between a first point and a second point with an interval of about 10 mm, and the center of the sample (third point) was pressed at a regular speed in a thickness direction of the sample using a probe to perform a bending property test. The force applied on the third point, while moving in the thickness direction at a speed of about 5 mm/min, was measured. The measurement results are shown in Table 2 and FIG. 8. The maximum bending strength (or maximum bending force) was a maximum value of the force applied to the sample according to the moving distance of the probe.

Table 2

| Classification | 90° Adhesive force [gf/mm] | Peel strength [kN/mm] | Bending strength [N] |
|---|---|---|---|
| Example 1 | 0.12 | 0.059 | 0.15 |

(continued)

| Classification | 90° Adhesive force [gf/mm] | Peel strength [kN/mm] | Bending strength [N] |
|---|---|---|---|
| Example 2 | 0.2 | 0.065 | 0.18 |
| Example 3 | 1.0 | 0.079 | 0.30 |
| Example 4 | 1.5 | 0.060 | 0.20 |
| Comparative Example 1 | 0.08 | 0.045 | 0.11 |
| Comparative Example 2 | 0.10 | 0.055 | 0.10 |

As shown in Table 2, compared to the positive electrodes according to the comparative examples, the positive electrodes according to the examples each had increased adhesive force and peel strength. The maximum bending strength values of the positive electrodes according to the examples were each higher than the maximum bending strength values of the positive electrodes according to the comparative examples.

In addition, as shown in Table 2 and FIG. 8, the maximum bending strength values of the positive electrodes according to the examples were each higher than the maximum bending strength values of the positive electrodes according to the comparative examples.

Therefore, it can be seen that the positive electrodes according to the examples had significantly improved adhesive force between the positive electrode active material layer and the positive electrode current collector, compared to the positive electrodes according to the comparative examples.

**Evaluation Example 4: Positive Electrode Loading Level (L/L, mg/cm$^2$)**

The loading levels (mg/cm$^2$) of the positive electrodes produced according to Example 1 and Comparative Example 1 were each measured, and the results are shown in FIG. 9A and FIG. 9B.

In particular, the positive electrode applied with the positive electrode active material and the positive electrode current collector not applied with the active material were each punched by a circular punch having a diameter of about 16 mm, and then the weights were measured. The weight of the positive electrode current collector not applied with the active material was subtracted from the weight of the positive electrode applied with the positive electrode active material to measure the weight of the active material loaded to the electrode, and the measured weight was divided by the area applied with the active material to measure the amount of the positive electrode active material applied per area (loading level, mg/cm$^2$).

Next, the bending strength of the positive electrode produced according to each of Example 1 and Comparative Example 1 was slowly increased, and phenomena occurring accordingly were observed. The results are shown in FIG. 9C.

As shown in FIGS. 9A to 9C, the loading level of the positive electrode according to the example was about 30 to ≤ 45 mg/cm$^2$. In addition, with the same bending strength, the positive electrode according to the comparative example had cracks occurred on the active material layer, but the positive electrode according to the example had no crack occurred on the active material layer.

Therefore, it can be seen that the positive electrode according to the example had improved flexibility, compared to the positive electrode according to the comparative example.

**Evaluation Example 5: Lifespan Characteristics of All-Solid-State Battery**

The positive electrodes produced according to the examples and comparative examples were applied to respective all-solid-state batteries. In this evaluation example, in order to evaluate a cell life of the all-solid-state battery, charging and discharging were performed in a constant current method using a charging and discharging tester.

The produced all-solid-state rechargeable battery was charged with a constant current of about 0.1 C rate at about 25 °C until a voltage reached about 3.63 V (vs. Li-In), and followed by a cut-off at a current of about 0.05 C rate while about 3.63 V was maintained in a constant voltage mode. Next, the battery was discharged with a constant current of about 0.1 C rate until the voltage reached about 1.88 V (vs. Li-In) (1st cycle). This cycle was repeated 50 times in substantially the same condition.

In all charging and discharging cycles, there was about 10-minute pause after each charging/discharging cycle. The test results of charging and discharging at high temperature are listed in Table 3. The capacity retention rate was defined by Equation 1.

Capacity retention rate [%] = [discharge capacity at the 50th cycle / discharge capacity at the 1st cycle] x 100 — Equation 1

Table 3

| Classification | Capacity retention rate [%] |
|---|---|
| Example 1 | 83 |
| Example 2 | 84 |
| Example 3 | 88 |
| Example 4 | 82 |
| Comparative Example 1 | 79 |
| Comparative Example 2 | 78 |

As shown in Table 3, it can be seen that the all-solid-state batteries applied with the positive electrodes according to the examples of the present disclosure each had improved cycle characteristics and lifespan, compared to those of the comparative examples.

Accordingly, the all-solid-state battery applied with the positive electrode slurry, described in the claims of the present disclosure, had improved discharge capacity due to improvement in adhesive force between the positive electrode current collector and the positive electrode active material layer, compared to those of the comparative examples, and even though the charging and discharging was repeated during the cycle, the positive electrode current collector and the positive electrode active material layer were stably in contact with each other without detachment or delamination, and thus, the capacity retention rate was improved. For example, these improvements were achieved by incorporating a phosphine-based additive, such as triphenyl phosphine ($PPh_3$), into the slurry formulation. The additive interacts chemically with the sulfide-based solid electrolyte, forming binder-modifying materials that enhance compatibility between the active material and the binder matrix. This chemical interaction reduces interfacial resistance and improves mechanical cohesion, thereby maintaining contact integrity during electrochemical cycling.

A method for producing a positive electrode slurry for an all-solid-state battery according to one or more embodiments of the present disclosure may provide a positive electrode slurry with improved adhesion characteristics. For this may be achieved through the incorporation of a phosphine-based additive, which interacts with the sulfide-based solid electrolyte to enhance the cohesion and mechanical robustness of the electrode structure. The resulting slurry not only facilitates uniform coating and high loading levels but also contributes to the long-term durability of the electrode during battery operation. For example, the additive's concentration was carefully tuned, as demonstrated in Examples 1-4, to balance the chemical reactivity and mechanical flexibility of the electrode. At desired ratios (e.g., 6.92 wt% in Example 3), the additive significantly improved adhesion and bending strength without compromising the electrochemical performance. This enhancement should achieve a slurry that could be processed using related art techniques while delivering superior electrode performance.

By applying the positive electrode slurry previously described, the present disclosure may provide a positive electrode with excellent or suitable electrochemical and mechanical performance. The resulting all-solid-state battery demonstrates enhanced safety, cycle life, and energy density, making it particularly suitable for demanding applications such as electric vehicles, aerospace systems, and /or grid-scale energy storage. For example, the synergistic effect of the phosphine-based additive and the sulfide-based solid electrolyte not only improves the mechanical integrity of the electrode but also contributes to more uniform ion transport pathways. This results in reduced internal resistance and more stable cycling behavior, which are for the practical deployment of all-solid-state batteries in high-performance applications.

In the present disclosure, expressions such as "at least one of," "one of," and "selected from," when preceding a list of elements, modify the entire list of elements and do not modify the individual elements of the list. For example, "at least one of a, b or c", "at least one selected from a, b, and c", "at least one selected from among a to c", etc., may indicate only a, only b, only c, both (e.g., simultaneously) a and b, both (e.g., simultaneously) a and c, both (e.g., simultaneously) b and c, all of a, b, and c, or variations thereof. The "/" utilized herein may be interpreted as "and" or as "or" depending on the situation.

In the context of the present disclosure and unless otherwise defined, the terms "use," "using," and "used" may be considered synonymous with the terms "utilize," "utilizing," and "utilized," respectively.

In present disclosure, the term "Group" as utilized herein refers to a group of the Periodic Table of Elements according to the 1 to 18 grouping system of the International Union of Pure and Applied Chemistry ("IUPAC").

As used herein, the terms "substantially," "about," and similar terms are used as terms of approximation and not as terms of degree, and are intended to account for the inherent deviations in measured or calculated values that would be recognized by those of ordinary skill in the art. "About" or "approximately," as used herein, is also inclusive of the stated value and means within an acceptable range of deviation for the particular value as determined by one of ordinary skill in the art, considering the measurement in question and the error associated with measurement of the particular quantity

(i.e., the limitations of the measurement system). For example, "about" may mean within one or more standard deviations, or within ± 30%, 20%, 10%, or 5% of the stated value.

Any numerical range recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

An apparatus for manufacturing a dry electrode, and/or any other relevant devices or components according to embodiments of the present invention described herein may be implemented further utilizing any suitable hardware, firmware (e.g., an application-specific integrated circuit), software, or a combination of software, firmware, and hardware. For example, the various components of the device may be formed on one integrated circuit (IC) chip or on separate IC chips. Further, the various components of the device may be implemented on a flexible printed circuit film, a tape carrier package (TCP), a printed circuit board (PCB), or formed on one substrate. Further, the various components of the device may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random-access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the present disclosure.

A person of ordinary skill in the art would appreciate, in view of the present disclosure in its entirety, that each suitable feature of the various embodiments of the present disclosure may be combined or combined with each other, partially or entirely, and may be technically interlocked and operated in various suitable ways, and each embodiment may be implemented independently of each other or in conjunction with each other in any suitable manner unless otherwise stated or implied.

Although one or more embodiments of the present disclosure have been described with reference to the accompanying drawings, it is understood that the present disclosure may be implemented in other specific forms without changing its technical idea or essential features. Therefore, the embodiments described above should be understood in all respects as illustrative and not limiting. Accordingly, the technical scope of the disclosure is not intended to be limited to the content set forth in the detailed description of the disclosure, but is intended to be defined by the appended claims and equivalents thereof.

## Claims

**1.** A positive electrode slurry, comprising:

a positive electrode active material;
a conductive material;
a binder;
a sulfide-based solid electrolyte;
a phosphine-based additive represented by Formula 1; and
a solvent,

Formula 1

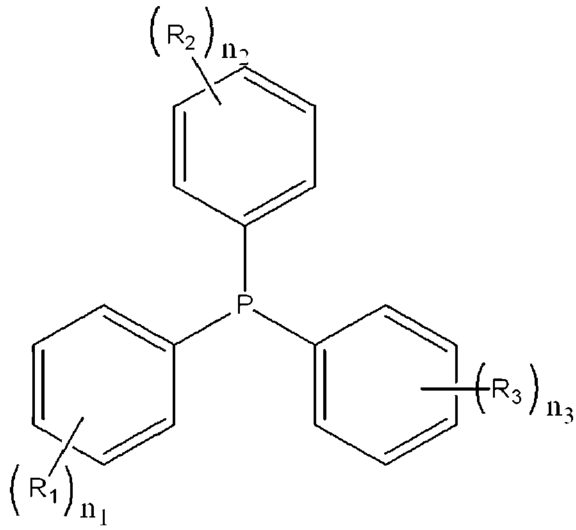

,

wherein, in Formula 1,
$n_1$ to $n_3$ are each independently 0 to 5, and
$R_1$ to $R_3$ are each independently hydrogen, a halogen, a nitrile group, a nitro group, an amine group, a substituted or unsubstituted C1 to C10 alkyl group, a substituted or unsubstituted C1 to C10 alkoxy group, a substituted or unsubstituted aryl group, or a substituted or unsubstituted C5 to C14 heteroaryl group, and
wherein the positive electrode slurry is a positive electrode slurry for an all-solid-state battery.

2. The positive electrode slurry of claim 1, wherein the phosphine-based additive comprises at least one selected from the group consisting of triphenyl phosphine, tris(4-trifluoromethylphenyl)phosphine, tris(4-fluorophenyl)phosphine, tris[3,5-bis(trifluoromethyl)phenyl]phosphine, tris(4-chlorophenyl)phosphine, tris(2,4,6-trimethylphenyl)phosphine, tris(4-methoxyphenyl)phosphine, tris(pentafluorophenyl)phosphine, tris(4-methoxy-3,5-dimethylphenyl)phosphine, tris(3,5-dimethylphenyl)phosphine, tri(o-tolyl)phosphine, diphenyl(p-tolyl)phosphine, and combinations thereof.

3. The positive electrode slurry of claim 1 or 2, wherein the phosphine-based additive is in an amount of ≥ 0.01 parts by weight to ≤ 3 parts by weight on the basis of a total 100 parts by weight of the positive electrode active material, the conductive material, and the binder.

4. The positive electrode slurry of any of the claims 1 to 3, wherein the sulfide-based solid electrolyte is in an amount of ≥ 5 parts by weight to ≤ 25 parts by weight on the basis of a total 100 parts by weight of the positive electrode active material, the conductive material, and the binder.

5. The positive electrode slurry of any of the claims 1 to 4, wherein the solvent is in an amount of ≥ 15 parts by weight to ≤ 50 parts by weight on the basis of a total 100 parts by weight of the positive electrode active material, the conductive material, and the binder.

6. The positive electrode slurry of any of the claims 1 to 5, wherein a weight ratio of the phosphine-based additive to the sulfide-based solid electrolyte is ≥ 0.2 to ≤ 25.

7. The positive electrode slurry of any of the claims 1 to 6, wherein the positive electrode active material comprises a compound represented by Formula 2:

Formula 2 $Li_aNi_xCo_yMn_zX_cO_{2-b}$,

in Formula 2, $0.8 \leq a \leq 1.2$, $0.8 \leq x \leq 1.0$, $0 \leq y \leq 0.1$, $0 \leq z \leq 0.1$, $0 \leq c \leq 0.1$, $0 \leq b \leq 0.05$, and $x + y + z + c = 1$, and X being at least one element selected from the group consisting of Al, Ti, Mg, Zr, Mo, and Nb.

8. The positive electrode slurry of any of the claims 1 to 7, wherein the binder comprises a fluoride-based binder.

**9.** The positive electrode slurry of any of the claims 1 to 8, wherein the conductive material comprises at least one selected from the group consisting of natural graphite, artificial graphite, carbon black, acetylene black, Ketjen black, a carbon fiber, a carbon nanofiber, a carbon nanotube, and combinations thereof.

**10.** The positive electrode slurry of any of the claims 1 to 9, wherein the sulfide-based solid electrolyte is an argyrodite-type compound comprising $Li_{7-a}M_aPS_{6-c}X_c$ ($0 \leq a \leq 2$ and $0 \leq c \leq 2$),

X is F, Br, Cl, I, or a combination thereof, and
M is scandium, yttrium, titanium, zirconium, hafnium, vanadium, niobium, tantalum, chromium, molybdenum, tungsten, manganese, technetium, rhenium, iron, ruthenium, osmium, cobalt, rhodium, iridium, nickel, palladium, platinum, copper, silver, gold, zinc, cadmium, mercury, aluminum, gallium, indium, thallium, silicon, germanium, tin, lead, arsenic, antimony, bismuth, or a combination thereof.

**11.** A method for making a positive electrode slurry according to any of the claims 1 to 10.
A method, comprising mixing a positive electrode active material, a conductive material, a binder, a sulfide-based solid electrolyte, a phosphine-based additive represented by Formula 1, and a solvent:

Formula 1

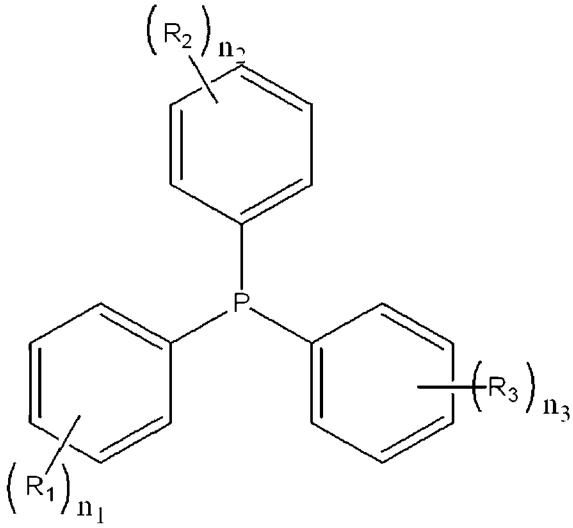

,

wherein, in Formula 1,

$n_1$ to $n_3$ are each independently 0 to 5,
$R_1$ to $R_3$ are each independently a hydrogen atom, a halogen group, a nitrile group, a nitro group, an amine group, a substituted or unsubstituted C1 to C10 alkyl group, a substituted or unsubstituted C1 to C10 alkoxy group, a substituted or unsubstituted aryl group, or a substituted or unsubstituted C5 to C14 heteroaryl group, and
wherein the method is a method for producing a positive electrode slurry for an all-solid-state battery.

**12.** The method of claim 11, wherein the phosphine-based additive comprises at least one selected from the group consisting of triphenyl phosphine, tris(4-trifluoromethylphenyl)phosphine, tris(4-fluorophenyl)phosphine, tris[3,5-bis(trifluoromethyl)phenyl]phosphine, tris(4-chlorophenyl)phosphine, tris(2,4,6-trimethylphenyl)phosphine, tris(4-methoxyphenyl)phosphine, tris(pentafluorophenyl)phosphine, tris(4-methoxy-3,5-dimethylphenyl)phosphine, tris(3,5-dimethylphenyl)phosphine, tri(o-tolyl)phosphine, diphenyl(p-tolyl)phosphine, and combinations thereof.

**13.** The method of claim 11 or 12, wherein the binder comprises a fluoride-based binder, and

wherein the sulfide-based solid electrolyte is an argyrodite-type compound comprising $Li_{7-a}M_aPS_{6-c}X_c$ ($0 \leq a \leq 2$ and $0 \leq c \leq 2$),
X is F, Br, Cl, I, or a combination thereof, and
M is scandium, yttrium, titanium, zirconium, hafnium, vanadium, niobium, tantalum, chromium, molybdenum, tungsten, manganese, technetium, rhenium, iron, ruthenium, osmium, cobalt, rhodium, iridium, nickel, palladium,

platinum, copper, silver, gold, zinc, cadmium, mercury, aluminum, gallium, indium, thallium, silicon, germanium, tin, lead, arsenic, antimony, bismuth, or a combination thereof.

**14.** The method of any of the claims 11 to 13, wherein the phosphine-based additive is in an amount of $\geq 0.01$ parts by weight to $\leq 3$ parts by weight on the basis of a total 100 parts by weight of the positive electrode active material, the conductive material, and the binder.

**15.** The method of any of the claims 11 to 14, wherein the sulfide-based solid electrolyte is in an amount of $\geq 5$ parts by weight to $\leq 25$ parts by weight on the basis of a total 100 parts by weight of the positive electrode active material, the conductive material, and the binder.

FIG. 1

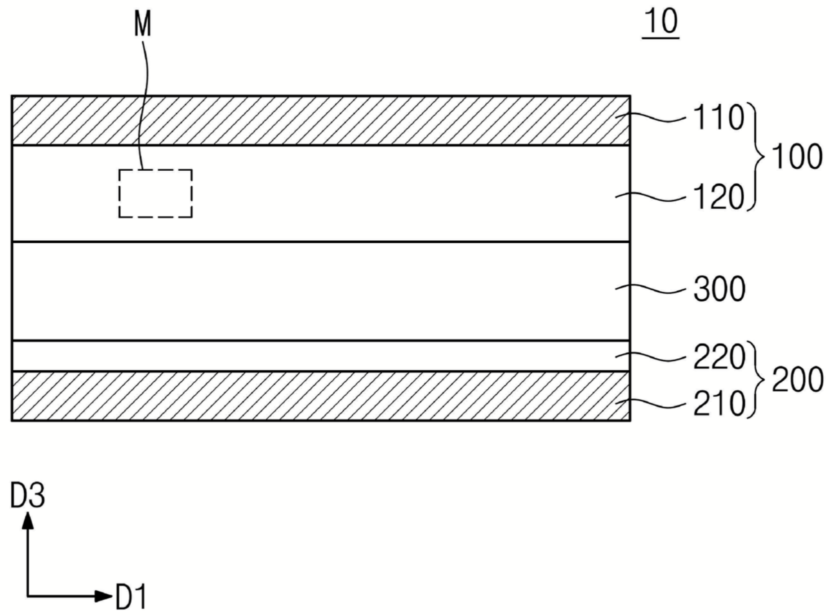
M
10
110
120
100
300
220
210
200
D3
D1

FIG. 2

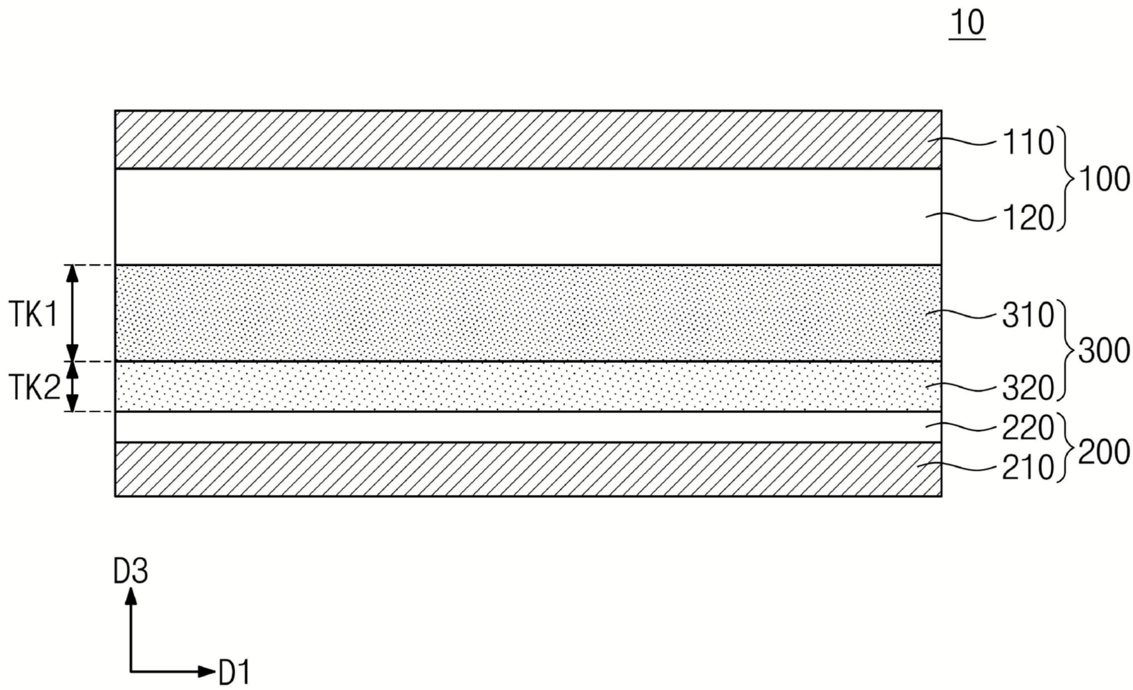
10
110
120
100
TK1
TK2
310
320
300
220
210
200
D3
D1

FIG. 3

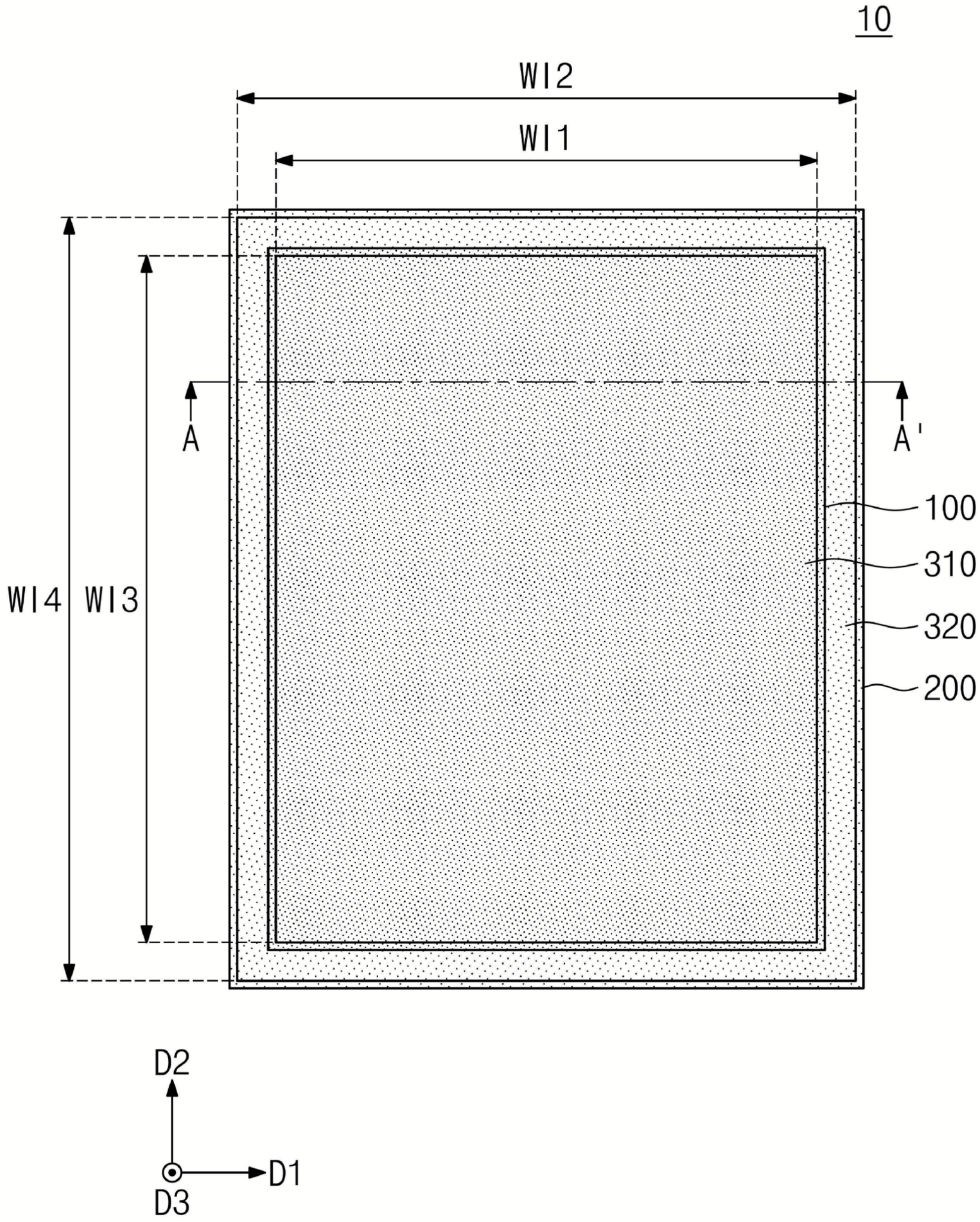

FIG. 4

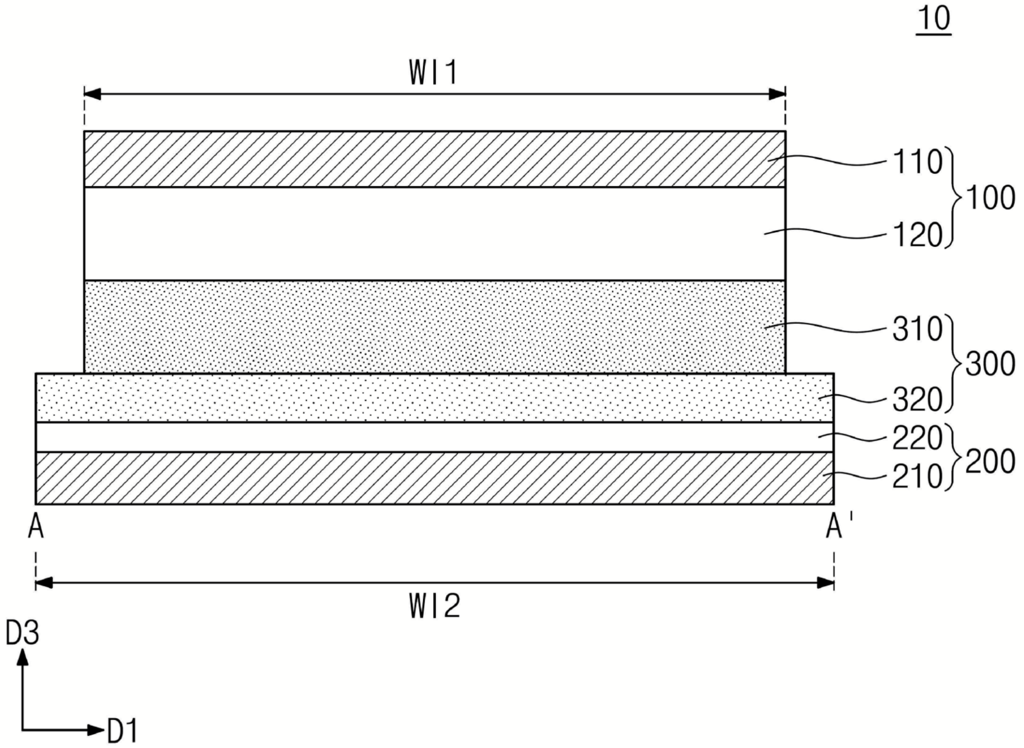
10
WI1
110
100
120
310
300
320
220
200
210
A
A'
WI2
D3
D1

FIG. 5

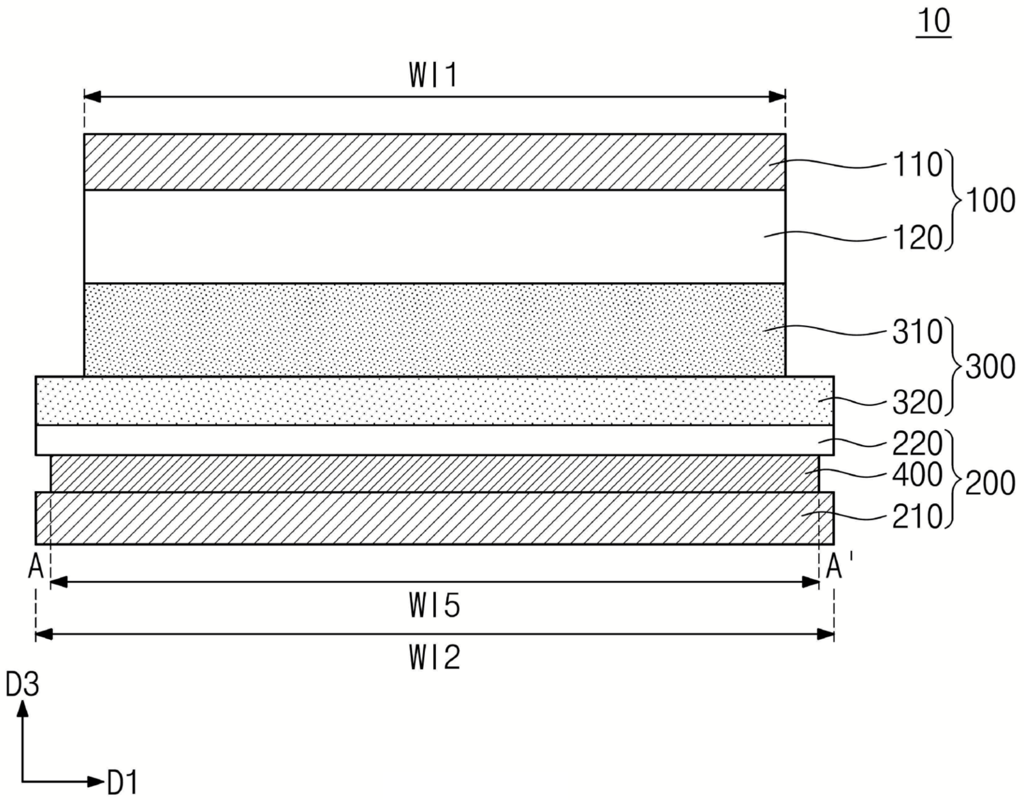
10
WI1
110
100
120
310
300
320
220
400
200
210
A
A'
WI5
WI2
D3
D1

FIG. 6

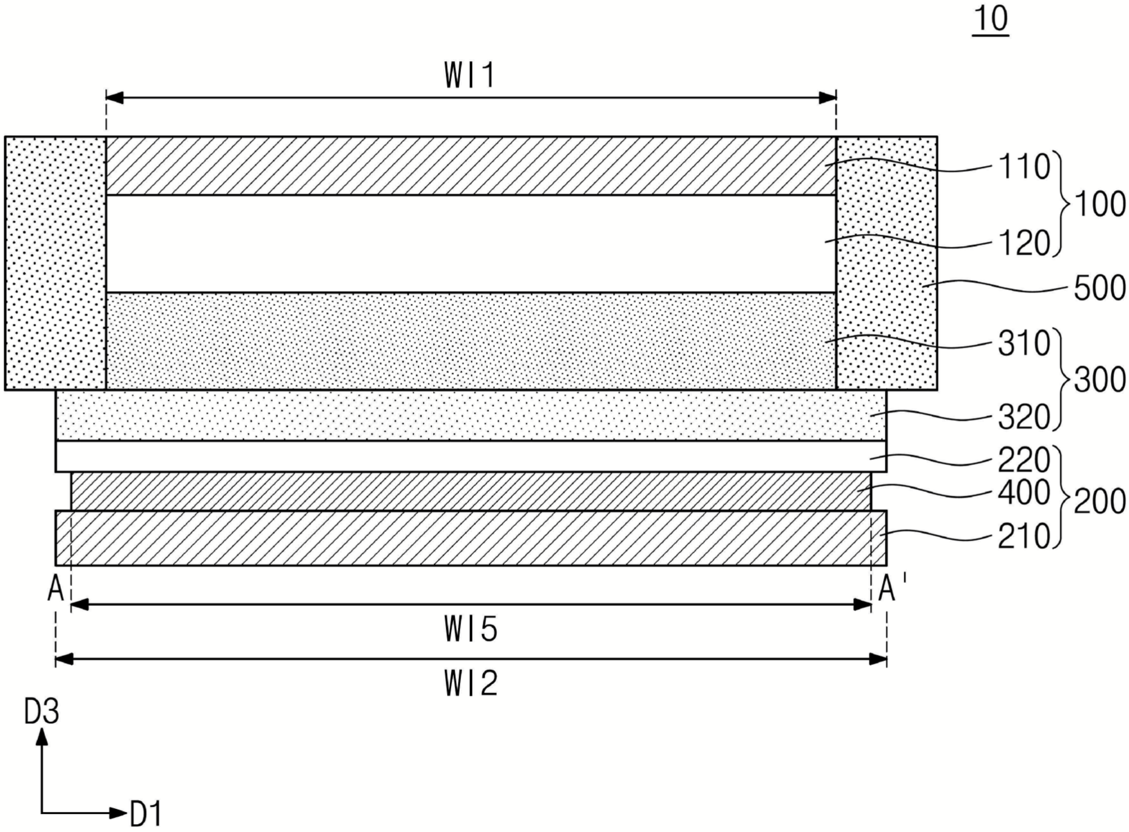
10
WI1
110
100
120
500
310
300
320
220
400
200
210
A
A'
WI5
WI2
D3
D1

FIG. 7

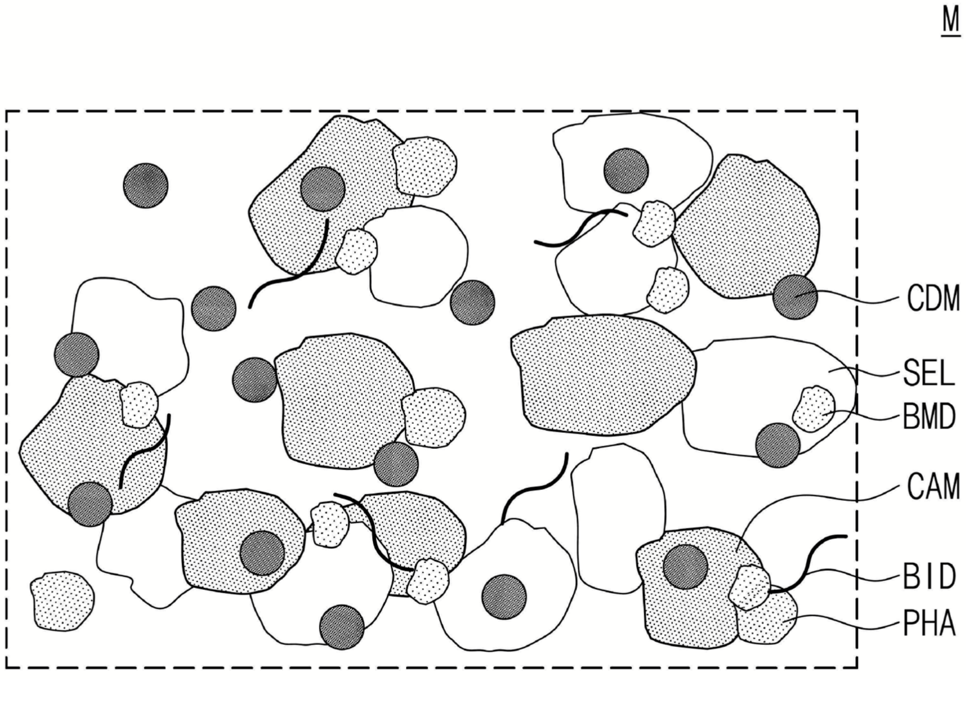
M
CDM
SEL
BMD
CAM
BID
PHA

FIG. 8

| Comparative Example 1 | Example 1 | Example 2 | Example 3 |
|---|---|---|---|

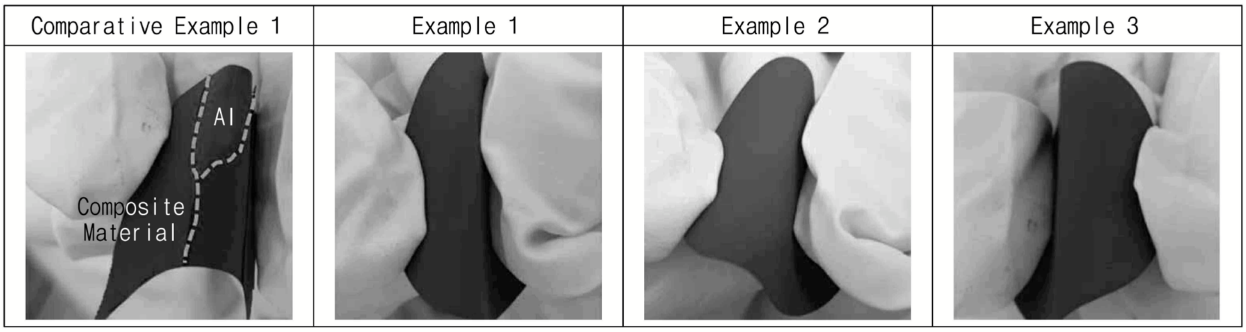

FIG. 9A

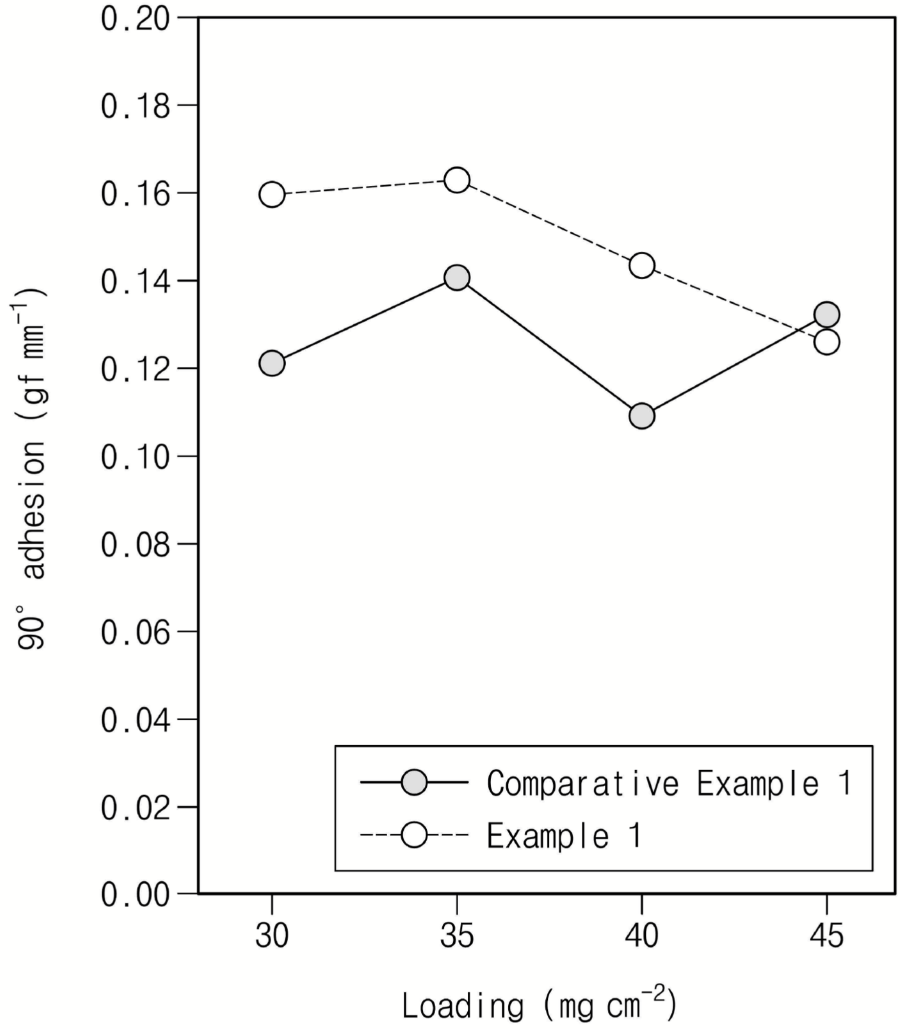


FIG. 9B

| Mandrel Rad. | Comparative Example 1 | | | | Example 1 | | | |
|---|---|---|---|---|---|---|---|---|
| | 31 | 37 | 41 | 45 | 31 | 37 | 41 | 45 |
| 3 | | | | | | | | X |
| 4 | X | X | X | X | X | X | X | X |
| 5 | X | O | O | X | O | O | X | O |
| 6 | O | O | O | X | | | O | O |
| 8 | | O | O | O | | | | O |

FIG. 9C

| Classification | Comparative Example 1 | | | | Example 1 | | | |
|---|---|---|---|---|---|---|---|---|
| L/L [mg/cm$^2$] | 31 | 37 | 41 | 45 | 31 | 37 | 41 | 45 |
| Top view | 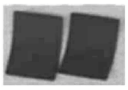 | 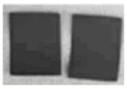 | 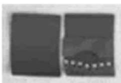 | 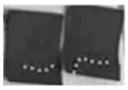 | 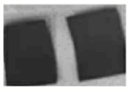 | 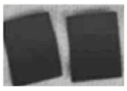 | 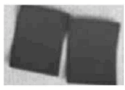 | 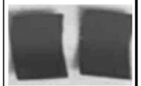 |
| Side view | 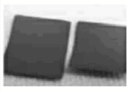 | 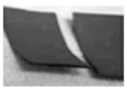 | 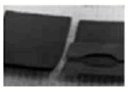 | 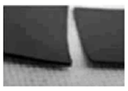 | 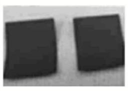 | 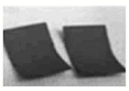 | 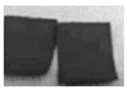 | 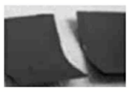 |
| Bending Strength (N) | 0.12 | 0.16 | 0.15-0.18 | 0.15-0.19 | 0.14 | 0.19 | 0.19 | 0.28 |
| Note | | Peeled | Peeled /Broken | Peeled /Broken | | | | Peeled |

Europäisches Patentamt
European Patent Office
Office européen des brevets

# EUROPEAN SEARCH REPORT

Application Number
EP 25 21 2893

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2024/024827 A1 (IDEMITSU KOSAN CO [JP]) 1 February 2024 (2024-02-01) | 1,2,8,9, 11,12, 14,15 | INV. H01M10/0562 |
| Y | * the whole document * | 7,10,13 | |
| E | & US 2026/038885 A1 (MORIYAMA KENJI [JP] ET AL) 5 February 2026 (2026-02-05) * page 11, par.231; page 12, par. 235; page 14, compound B2; page 17, paragraphs 323-319, page 18, table 1, example 4 * ----- | 1-15 | |
| Y | CN 118 522 979 A (RUIPU LANJUN ENERGY CO LTD ET AL.) 20 August 2024 (2024-08-20) * par. 89 * ----- | 7 | |
| Y | US 2022/311049 A1 (MASUDA NAOYA [JP] ET AL) 29 September 2022 (2022-09-29) * par. 79-82; claims * ----- | 10,13 | |

TECHNICAL FIELDS SEARCHED (IPC)

H01M

The present search report has been drawn up for all claims

| Place of search | Date of completion of the search | Examiner |
|---|---|---|
| Munich | 25 February 2026 | Bettio, Andrea |

3

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
..........
& : member of the same patent family, corresponding document

EPO FORM 1503 03.82 (P04C01)

# ANNEX TO THE EUROPEAN SEARCH REPORT ON EUROPEAN PATENT APPLICATION NO.

EP 25 21 2893

This annex lists the patent family members relating to the patent documents cited in the above-mentioned European search report.
The members are as contained in the European Patent Office EDP file on
The European Patent Office is in no way liable for these particulars which are merely given for the purpose of information.

25-02-2026

| Patent document cited in search report | Publication date | Patent family member(s) | Publication date |
|---|---|---|---|
| WO 2024024827 A1 | 01-02-2024 | CN 119365936 A | 24-01-2025 |
| | | JP WO2024024827 A1 | 01-02-2024 |
| | | KR 20250037403 A | 17-03-2025 |
| | | US 20260038885 A1 | 05-02-2026 |
| | | WO 2024024827 A1 | 01-02-2024 |
| CN 118522979 A | 20-08-2024 | NONE | |
| US 2022311049 A1 | 29-09-2022 | JP 7319900 B2 | 02-08-2023 |
| | | JP 2020095953 A | 18-06-2020 |
| | | US 2020185767 A1 | 11-06-2020 |
| | | US 2022311049 A1 | 29-09-2022 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020240154225